Europäisches Patentamt

European Patent Office

Office européen des brevets

(19)

(11) Veröffentlichungsnummer: **0 131 316
B1**

(12) **EUROPÄISCHE PATENTSCHRIFT**

(45) Veröffentlichungstag der Patentschrift: **05.12.90**

(21) Anmeldenummer: **84200349.3**

(22) Anmeldetag: **12.03.84**

(51) Int. Cl.⁵: **G 11 B 5/00**, G 11 B 5/58, G 11 B 15/467

(54) **System zum Wiedergeben von auf einem Magnetband gespeicherten Informationssignalen.**

(30) Priorität: **15.03.83 AT 909/83**

(43) Veröffentlichungstag der Anmeldung:
**16.01.85 Patentblatt 85/03**

(45) Bekanntmachung des Hinweises auf die
Patenterteilung:
**05.12.90 Patentblatt 90/49**

(84) Benannte Vertragsstaaten:
**AT DE FR GB IT**

(56) Entgegenhaltungen:
**EP-A-0 037 738
EP-A-0 091 187
US-A-4 255 768**

(73) Patentinhaber: **N.V. Philips'
Gloeilampenfabrieken
Groenewoudseweg 1
NL-5621 BA Eindhoven (NL)**

(72) Erfinder: **Hoogendoorn, Abraham**
**c/o INT.OCTROOIBUREAU B.V. Prof. Holstlaan 6
NL-5656 AA Eindhoven (NL)**
Erfinder: **Kuchar, Franz**
**c/o INT.OCTROOIBUREAU B.V. Prof. Holstlaan 6
NL-5656 AA Eindhoven (NL)**

(74) Vertreter: **van der Kruk, Willem Leonardus et al
INTERNATIONAAL OCTROOIBUREAU B.V. Prof.
Holstlaan 6
NL-5656 AA Eindhoven (NL)**

Courier Press, Leamington Spa, England.

**Beschreibung**

Die Erfindung bezieht sich auf ein System zum Wiedergeben von auf einem Magnetband in schräg zu dessen Längsrichtung verlaufenden, parallel nebeneinander liegenden Spuren gespeicherten Informationssignalen bei verschiedenen, durch Betätigen einer Betriebsarten-Wähleinrichtung einschaltbaren Betriebsarten mit unterschiedlichen vorgegebenen Fortbewegungsgeschwindigkeiten des Magnetbandes, das zum Fortbewegen des Magnetbandes eine hinsichtlich der Fortbewegungsgeschwindigkeit umschaltbare Bandantriebseinrichtung und zum aufeinanderfolgenden Abtasten der Spuren mindestens einen von einer Kopfantriebseinrichtung rotierend antreibbaren Magnetkopf sowie zum Nachführen desselben entlang der Spuren ein Spurfolgeservosystem enthält, das zum Verstellen des Magnetkopfes quer zu den Spuren eine elektromechanische Verstelleinrichtung, der ein aus einem mit einem Regelkreis des Spurfolgeservosystems erzeugten Regelsignal und aus einem sägezahnförmigen, im Signalverlauf den Fortbewegungsgeschwindigkeiten des Magnetbandes angepassten Steuersignal zusammengesetztes Stellsignal zuführbar ist, und das zum Erzeugen des sägezahnförmigen Steuersignales einen hinsichtlich des Signalverlaufes umschaltbaren Sägezahnsignalgenerator aufweist, wobei zum Umschalten der Bandantriebseinrichtung und des Sägezahnsignalgenerators bei einem Betriebsartenwechsel eine durch Betätigen der Betriebsarten-Wähleinrichtung ansteuerbare Schalteinrichtung zum Erzeugen von mindestens einem Schaltsignal vorgesehen ist, die sowohl die Bandantriebseinrichtung hinsichtlich der Fortbewegungsgeschwindigkeit des Magnetbandes als auch den Sägezahnsignalgenerator hinsichtlich des Signalverlaufes des Steuersignales in einem vorgegebenen Umschaltvorgang korrespondierend zueinander umschaltet.

Ein solches System vorstehend angeführter Gattung ist beispielsweise aus den unter der Typenbezeichnung VR 2024 und VR 2220 im Handel befindlichen Videomagnetbandgeräten der Anmelderin zum Aufzeichnen und/oder Wiedergeben von Fernsehsignalen bekannt. Mit diesen Videomagnetbandgeräten können Fernsehsignale bei einer sogenannten Normalgeschwindigkeit des Magnetbandes auf demselben in schräg zu dessen Längsrichtung verlaufenden, parallel nebeneinander liegenden Spuren mit Hilfe von zwei an einer rotierend antreibbaren Magnetkopfeinheit diametral zueinander angeordneten Magnetköpfen aufgezeichnet werden. Die normale Wiedergabe der auf diese Weise gespeicherten Fernsehsignale erfolgt bei derselben Normalgeschwindigkeit, bei der auch die Aufzeichnung durchgeführt wurde. Um spezielle Bewegungseffekte, wie Zeitlupen- oder Zeitraffer-Effekte, zu erreichen und auch um einen sogenannten Suchlauf zum schnellen Aufsuchen von bestimmten Bildstellen durchführen zu können, besteht bei diesen Geräten auch die Möglichkeit, eine von der normalen Wiedergabe abweichende Wiedergabe der Fernsehsignale durchzuführen, wobei die Fortbewegungsgeschwindigkeit des Magnetbandes sowohl nach dem Betrag als auch dem Vorzeichen, durch das die Fortbewegungsrichtung des Magnetbandes festgelegt ist, gegenüber der Normalgeschwindigkeit abweicht und wobei aber trotz der hierbei geänderten Abtastverhältnisse die Magnetköpfe mit Hilfe des Spurfolgeservosystems genau entlang der auf dem Magnetband aufgezeichneten Spuren nachgeführt werden, so dass auch bei diesen Wiedergabe-Betriebsarten eine ungestörte und einwandfreie Wiedergabe der Fernsehsignale gewährleistet ist. Bei diesen Videomagnetbandgeräten ist selbstverständlich auch ein Betriebsartenwechsel möglich, bei dem von einer Wiedergabe-Betriebsart auf eine andere Wiedergabe-Betriebsart umgeschaltet wird; beispielsweise kann nach einem Suchlauf und Erreichen der gesuchten Bildstelle eine normale Wiedergabe eingeschaltet werden.

Bei dem aus den beiden genannten Videomagnetbandgeraten bekannten System zum Wiedergeben von Fernsehsignalen erfolgt das Umschalten zwischen zwei Wiedergabe-Betriebsarten mit unterschiedlichen Fortbewegungsgeschwindigkeiten des Magnetbandes in abrupter Weise durch die vom Benützer durchgeführte Betätigung eines der jeweils gewünschten Betriebsart zugeordneten Betriebsartenschalters einer aus mehreren Betriebsartenschaltern bestehenden Betriebsarten-Wähleinrichtung. Bei einer solchen Betätigung eines Betriebsartenschalters werden nämlich sowohl die Bandantriebseinrichtung als auch der Sägezahnsignalgenerator des Spurfolgeservosystems von der Schalteinrichtung in einem aus einem einzigen Sprung bestehenden Umschaltvorgang sofort auf die der jeweils gewünschten Betriebsart entsprechenden Betriebswerte umgeschaltet. Da aber sowohl die Bandantriebseinrichtung als auch die mit dem sägezahnförmigen Steuersignal des Sägezahnsignalgenerators gespeisten elektromechanischen Verstelleinrichtungen des Spurfolgeservosystems für die beiden diametral angeordneten Magnetköpfe aufgrund ihrer dynamischen Eigenschaften relativ grosse sprungartige, abrupte Bewegungsänderungen nicht durchführen können und ausserdem die dynamischen Eigenschaften der Bandantriebseinrichtung und der Verstelleinrichtungen des Spurfolgeservosystems vollkommen unterschiedlich zueinander sind, geht durch den abrupten Umschaltvorgang beim bekannten System das aufeinander abgestimmte, zueinander synchrone Betriebsverhalten zwischen der Bandantriebseinrichtung zum Antreiben des Magnetbandes und dem Spurfolgeservosystem zum Nachführen der Magnetköpfe entlang der auf dem von der Bandantriebseinrichtung angetriebenen Magnetband aufgezeichneten Spuren bei einem Betriebsartenwechsel vorübergehend verloren. Dies führt aber bei einem solchen Betriebsartenwechsel zu Störungen beim Abtasten der in den Spuren gespeicherten Fernsehsignale, was wiederum Bildstörungen bei der Wiedergabe der Fernsehsignale auf dem Bildschirm eines Fernsehempfängers zur Folge hat, die unangenehm und störend empfunden werden.

Die Erfindung hat sich zur Aufgabe gestellt, ein System der eingangs angeführten Gattung zu schaffen, bei dem auf einfache und sichere Weise auch bei einem Betriebsartenwechsel eine einwandfreie und störungsfreie Abtastung der auf dem Magnetband gespeicherten Informationssignale gewährleistet ist, um eine ungestörte Wiedergabe derselben zu erreichen. Hierfür ist die Erfindung dadurch gekennzeichnet, dass die Schalteinrichtung einen durch Betätigen der Betriebsarten-Wähleinrichtung in Betrieb setzbaren Schrittschaltsignalgenerator zum Erzeugen von bei einem Betriebsartenwechsel in automatisch und kontinuierlich aufeinanderfolgenden Schritten abgegebenen, bei jedem Schritt sich im Wert ändernden Schaltsignalen aufweist, der mit seinen Schaltsignalen die Bandantriebseinrichtung und den Sägezahnsignalgenerator hinsichtlich der Fortbewegunggeschwindigkeit des Magnetbandes und des Signalverlaufes des Steuersignals schrittweise in durch den Wert der Schaltsignale festgelegten, aneinander angepassten Stufen korrespondierend zueinander umschaltet, wobei der Umschaltvorgang in durch die Schrittfolge der Schaltsignale des Schrittschaltsignalgenerators festgelegte Umschaltintervalle unterteilt ist.

Durch die Unterteilung des Umschaltvorganges für die Bandantriebseinrichtung und für den Sägezahnsignalgenerator des Spurfolgeservosystems bei einem Betriebsartenwechsel zwischen zwei Wiedergabe-Betriebsarten in schrittweise aufeinanderfolgende, praktisch beliebig kleine Umschaltintervalle ist ein abruptes Umschalten vermieden und erreicht, dass die Bandantriebseinrichtung hinsichtlich der Fortbewegungsgeschwindigkeit des Magnetbandes und der Sägezahnsignalgenerator hinsichtlich des Signalverlaufes des Stuersignals für die elektromechanische Verstelleinrichtung des Spurfolgeservosystems durch die schrittweise auftretenden Schaltsignale in vielen, nahezu beliebig kleinen Stufen korrespondierend zueinander umgeschaltet werden, so dass die unterschiedlichen dynamischen Eigenschaften der Bandantriebseinrichtung und der elektromechanischen Verstelleinrichtung des Spurfolgeservosystems praktisch einflusslos bleiben und daher bei jeder bei einem Betriebsartenwechsel durch ein Schaltsignal eines Schrittes festgelegten Fortbewegunggeschwindigkeit des Magnetbandes der Magnetkopf durch Zufuhr des durch das entsprechende Schaltsignal dieses Schrittes in seinem Signalverlauf festgelegten, an die Fortbewegungsgeschwindigkeit des Magnetbandes angepassten, sägezahnförmigen Steuersignales zur elektromechanischen Verstelleinrichtung für denselben vom Spurfolgeservosystem stets genau entlang der abzutastenden Spuren geführt wird. Auf diese Weise ist also auch bei einem Betriebsartenwechsel stets ein genau aufeinander abgestimmtes, zueinander synchrones Betriebsverhalten von Bandantriebseinrichtung und Spurfolgeservosystem erreicht. Hierdurch werden bei einem Betriebsartenwechsel die Informationssignale stets störungsfrei und einwandfrei abgetastet, wodurch eine ungestörte Wiedergabe der Informationssignale beim Betriebsartenwechsel von einer Wiedergabe-Betriebsart auf eine andere Wiedergabe-Betriebsart gewährleistet ist.

An dieser Stelle sei erwähnt, dass aus der DE-PS-27 11 703 ein System zum Wiedergeben von in schrägen Spuren auf einem Magnetband gespeicherten Fernsehsignalen bekannt ist, bei dem die Fortbewegungsgeschwindigkeit des Magnetbandes zwischen der Normalgeschwindigkeit und Bandstillstand, wie dies bei einer sogenannten Stehbild-Wiedergabe der Fall ist, in nahezu beliebig kleinen Stufen variiert werden kann. Bei diesem System weist aber das Spurfolgeservosystem zum Nachführen des Magnetkopfes entlang der Spuren nur einen Regelkreis zur Erzeugung eines Stellsignals für die elektromechanische Verstelleinrichtung für den Magnetkopf auf, mit dem die aufgrund der variierenden Fortbewegungsgeschwindigkeit des Magnetbandes sich ergebenden Abweichungen der Abtastbahnen des Magnetkopfes gegenüber den am Magnetband aufgezeichneten Spuren ausgeglichen werden, es ist aber kein umschaltbarer Sägezahnsignalgenerator zum Erzeugen eines an die variierende Fortbewegungsgeschwindigkeit angepassten sägezahnförmigen Steuersignales für die elektromechanische Verstelleinrichtung vorgesehen, wie dies gemäss dem gattungsgemässen System der Fall ist. Dadurch hat beim bekannten System der Regelkreis des Spurfolgeservosystems Regelsignale mit relativ grossen Amplituden zu verarbeiten, worunter aber die Empfindlichkeit und die Nachführgenauigkeit des Spurfolgeservosystems leiden. Beim erfindungsgemässen System, bei dem das Stellsignal aus einem Regelsignal und einem sägezahnförmigen Steuersignal besteht, hat der Regelkreis des Spurfolgeservosystems hingegen nur Regelsignale mit kleinen Amplituden zu verarbeiten, wodurch eine hohe Empfindlichkeit und eine hohe Nachführgenauigkeit des Spurfolgeservosystems erreicht wird.

Ferner sei noch auf die EP-OS 0 037 738 und die EP-OS 0 043 739 hingewiesen, woraus Systeme zum Wiedergeben von in schrägen Spuren auf einem Magnetband gespeicherten Fernsehsignalen bekannt sind, die eine hinsichtlich der Fortbewegungsgeschwindigkeit umschaltbare Bandantriebseinrichtung und einen hinsichtlich des Signalverlaufes umschaltbaren Sägezahnsignalgenerator aufweisen. Dabei ist aber bei diesen bekannten Systemen vorgesehen, dass zuerst eine auf nicht näher beschriebene Art und Weise durchführbare Umschaltung der Bandantriebseinrichtung hinsichtlich der Fortbewegungsgeschwindigkeit des Magnetbandes vorgenommen wird, danach die Änderung der Fortbewegungsgeschwindigkeit des Magnetbandes mit einer ein Detektionssignal abgebenden Detektionseinrichtung detektiert wird und erst nachfolgend in Abhängigkeit vom abgegebenen Detektionssignal der Sägezahnsignalgenerator hinsichtlich des Signalverlaufes des Steuersignals umgeschaltet wird, wobei der Signalverlauf des sägezahnförmigen Steuersignals durch das in Abhängigkeit von der detektierten Fortbewegungsgeschwindigkeit des Magnetbandes gewonnene Detektionssignal festgelegt ist. Dies stellt aber eine ziemlich aufwendige Lösung dar, die einen relativ grossen Aufwand erfordert; auch ist hierbei der an die Fortbewegungsgeschwindigkeit anzupassende Signalverlauf des Steuersignals von der Detektionsgeschwindigkeit und der Detektionsgenauigkeit der Detektionseinrichtung abhängig. Beim erfindungsgemässen System erfolgt hingegen das Umschalten der Bandantriebseinrichtung und des Sägezahnsignalgenerators auf besonders einfache Weise in automatisch und kontinuierlich aufeinanderfolgenden Schritten korrespondierend zueinander, wobei bei jedem Schritt des Schrittschaltsignalgenerators sowohl die Bandantriebseinrichtung als auch der Sägezahnsignalgenerator mit den Schaltsignalen des betreffenden Schrittes gemeinsam umgeschaltet werden, wodurch einfach ohne weitere Hilfsmittel erreicht ist, dass die Fortbewegungsgeschwindigkeit des Magnetbandes und der Signalverlauf des sägezahnförmigen Steuersignales stets unmittelbar aneinander angepasst sind und durch die Werte dieser Schaltsignale, deren Werte sich von Schritt zu Schritt ändern, genau festgelegt sind.

Bei einem System der eingangs angeführten Gattung ist es zusätzlich bekannt, die Kopfantriebseinrichtung für den Magnetkopf zur Vermeidung von Zeitbasisfehlern in den vom Magnetkopf bei den Betriebsarten mit unterschiedlichen Fortbewegungsgeschwindigkeiten des Magnetbandes wiedergegebenen Informationssignalen hinsichtlich der Drehzahl des Magnetkopfes korrespondierend zur Bandantriebseinrichtung umzuschalten. Ein solches System ist beispielsweise auch in den bereits vorstehend angeführten Videomagnetbandgeräten VR 2024 und VR 2220 realisiert. Bei einem solchen System hat es sich als vorteilhaft erwiesen, wenn der Schrittschaltsignalgenerator bei einem Betriebsartenwechsel in automatisch und kontinuierlich aufeinanderfolgenden Schritten zusätzliche, bei jedem Schritt sich im Wert ändernde Schaltsignale abgibt und mit diesen zusätzlichen Schaltsignalen die Kopfantriebseinrichtung hinsichtlich der Drehzahl des Magnetkopfes schrittweise in durch den Wert der zusätzlichen Schaltsignale festgelegten, an die Stufen hinsichtlich der Umschaltung der Fortbewegungsgeschwindigkeit des Magnetbandes und des Signalverlaufes des Steuersignals angepassten Stufen korrespondierend zur Bandantriebseinrichtung und zum Sägezahnsignalgenerator umschaltet. Auf diese Weise ist erreicht, dass bei einem Betriebsartenwechsel zusätzlich zur Fortbewegungsgeschwindigkeit des Magnetbandes und zum Signalverlauf des sägezahnförmigen Steuersignales für die elektromechanische Verstelleinrichtung des Spurfolgeservosystems auch die Drehzahl des Magnetkopfes schrittweise, in nahezu beliebig kleinen Stufen umgeschaltet wird, wodurch dann bei einem Betriebsartenwechsel stets ein genau aufeinander abgestimmtes, zueinander synchrones Betriebsverhalten von der Bandantriebseinrichtung, dem Spurfolgeservosystem und zusätzlich auch der Kopfantriebseinrichtung erreicht ist. Durch das schrittweise und in nahezu beliebig kleinen Stufen angepasste Umschalten der Drehzahl des Magnetkopfes ist gewährleistet, dass auch bei einem Betriebsartenwechsel keine Zeitbasisfehler in den wiedergegebenen Informationssignalen auftreten. Dies ist für den Fall, dass es sich um Farbfernsehsignale handelt, besonders zweckmässig, da Zeitbasisfehler bei der Wiedergabe von Farbfernsehsignalen durch die dadurch verursachten Farbfehler als besonders störend empfunden werden.

Im Hinblick auf den zeitlichen Ablauf der Schrittfolge der Schaltsignale des Schrittschaltsignalgenerators hat sich als vorteilhaft erwiesen, wenn der Schrittschaltsignalgenerator die Schaltsignale in aufeinanderfolgenden Schritten mit gleichem zeitlichen Abstand abgibt. Auf diese Weise ist eine besonders einfache zeitliche Ablaufsteuerung für den Schrittschaltsignalgenerator hinsichtlich der Schrittfolge der Schaltsignale erreicht. Dies ist insbesondere dann zweckmässig, wenn die durch die Werte der Schaltsignale festgelegte Grösse der Stufen, mit denen die Umschaltungen bei einem Betriebsartenwechsel erfolgen, stets gleich gross ist.

Wenn die Grösse der Stufen, mit denen die Umschaltungen bei einem Betriebsartenwechsel erfolgen, unterschiedlich gross ist, hat sich als vorteilhaft erwiesen, wenn der Schrittschaltsignalgenerator die Schaltsignale in aufeinanderfolgenden Schritten mit zur Grösse der durch den Wert der Schaltsignale festgelegten, aneinander angepassten Stufen proportionalen zeitlichen Abständen abgibt. Hierdurch ist erreicht, dass die zeitliche Ablaufsteuerung für den Schrittschaltsignalgenerator hinsichtlich der Schrittfolge der Schaltsignale von der durch die Werte der Schaltsignale festgelegten Grösse der Stufen, mit denen die Umschaltungen bei einem Betriebsartenwechsel erfolgen, abhängig gemacht ist, so dass in einfacher Weise eine Anpassung der Schrittfolge an die Grösse der Stufen gewährleistet ist.

Im Hinblick auf den zeitlichen Ablauf der Schrittfolge der Schaltsignale des Schrittschaltsignalgenerators hat sich auch als vorteilhaft erwiesen, wenn der Schrittschaltsignalgenerator die Schaltsignale in aufeinanderfolgenden Schritten mit einer mit dem Schrittschaltsignalgenerator zusammenwirkenden Vergleichseinrichtung festgelegten zeitlichen Abständen abgibt, wobei der Vergleichseinrichtung einerseits von einer mit dem Magnetband zusammenwirkenden, zum Detektieren der Fortbewegungsgeschwindigkeiten des Magnetbandes vorgesehenen Detektionseinrichtung abgegebene Detektionssignale und andererseits Referenzsignale, deren Werte den vom Schrittschaltsignalgenerator mit den in Schritten abgegebenen Schaltsignalen festgelegten Fortbewegungsgeschwindigkeiten des Magnetbandes entsprechen, zum Vergleich zugeführt sind und die Vergleichseinrichtung bei Koinzidenz der ihr zugeführten Signale den Schrittschaltsignalgenerator zur Abgabe der Schaltsignale gemäss dem nächsten Schritt freigibt. Hierdurch ist erreicht, dass die Abgabe der Schaltsignale gemäss dem jeweils nächsten Schritt immer erst dann möglich ist, wenn die Bandantriebseinrichtung das Magnetband bereits tatsächlich mit der durch das betreffende Schaltsignal gemäss dem vorausgegangenen Schritt festgelegten Fortbewegungsgeschwindigkeit antreibt. Hierdurch ist mit Sicherheit eine zu hohe Schrittfolge, der die Bandantriebseinrichtung aufgrund der mechanischen Gegebenheiten in einem erfindungsgemässen System ohne Verlust des aufeinander abgestimmten, zueinander synchronen Betriebsverhaltens mit dem Spurfolgeservosystem nicht folgen kann, vermieden. Somit ist auf diese Weise erreicht, dass die zeitliche Ablaufsteuerung für den Schrittschaltsignalgenerator hinsichtlich der Schrittfolge der Schaltsignale in einfacher Weise an die mechanischen Gegebenheiten für die Bandantriebseinrichtung angepasst ist. Dies ist insbesondere dann zweckmässig, wenn sich in einem erfindungsgemässen System die mechanischen Gegebenheiten für die Bandantriebseinrichtung in einem relativ grossen Bereich ändern, was beispielsweise der Fall ist, wenn durch Verwendung von verschiedenen Magnetbandkassetten unterschiedliche Bandmengen im System vorliegen, oder davon abhängig ist, ob ein Betriebsartenwechsel näher beim Bandanfang oder näher beim Bandende vorgenommen wird, da sich auch dann die Antriebsverhältnisse für die Bandantriebseinrichtung ändern.

Im Hinblick auf die Ausbildung des Schrittschaltsignalgenerators hat es sich als vorteilhaft erwiesen, wenn zur Bildung des Schrittschaltsignalgenerators eine programmierbare Datenverarbeitungseinheit herangezogen ist. Auf diese Weise ist ein besonders einfacher, kompakter und betriebssicherer Aufbau erreicht. Die Datenverarbeitungseinheit kann hierbei zweckmässig mit einem Mikroprozessor aufgebaut sein.

Als vorteilhaft hat es sich hierbei ferner erwiesen, wenn zur Bildung der Vergleichseinrichtung und der Detektionseinrichtung ebenfalls die Datenverarbeitungseinheit herangezogen ist. Auf diese Weise sind auch die Vergleichseinrichtung und die Detektionseinrichtung praktisch ohne zusätzliche Mittel in einfacher, kompakter und betriebssicherer Weise mit Hilfe der Datenverarbeitungseinheit realisiert.

Im Hinblick auf die der Vergleichseinrichtung zugeführten Referenzsignale ist es unter Ausnützung der Datenverarbeitungseinheit möglich, bei jedem Schritt des Schrittschaltsignalgenerators in einem separaten Rechenvorgang den Wert des entsprechenden Referenzsignals zu errechnen. Ein solcher Rechenvorgang nimmt aber eine relativ lange Zeitdauer in Anspruch. Es hat sich daher als vorteilhaft erwiesen, wenn die Werte der der Vergleichseinrichtung zugeführten Referenzsignale für alle Schritte des Schrittschaltsignalgenerators in Tabellenform in der Datenverarbeitungseinheit gespeichert sind. Auf diese Weise ist erreicht, dass der Wert des Referenzsignales bei jedem Schritt des Schrittschaltsignalgenerators ohne die für einen Rechenvorgang notwendige Wartezeit besonders rasch zur Verfügung steht, wobei auch eine günstige Ausnützung der zur Verfügung stehenden Speicherplätze erhalten wird.

Auch die Werte aller Schaltsignale für alle Schritte des Schrittschaltsignalgenerators können mit der Datenverarbeitungseinheit bei jedem Schritt in einem separaten Rechenvorgang errechnet werden. Es hat sich aber auch in diesem Zusammenhang als vorteilhaft erwiesen, wenn die Werte aller Schaltsignale für alle Schritte des Schrittschaltsignalgenerators in Tabellenform in der Datenverarbeitungseinheit gespeichert sind. Auch in diesem Fall ergibt sich bei jedem Schritt des Schrittschaltsignalgenerators eine besonders kurze Zugriffszeit zu den Werten der Schaltsignale, wobei auch eine günstige Ausnützung der zur Verfügung stehenden Speicherplätze erhalten wird.

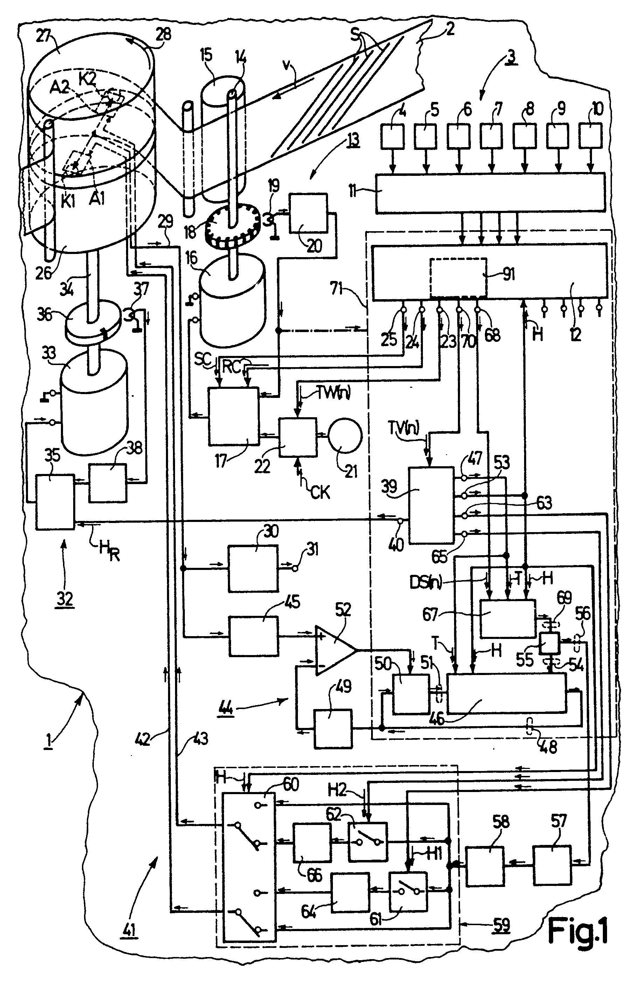

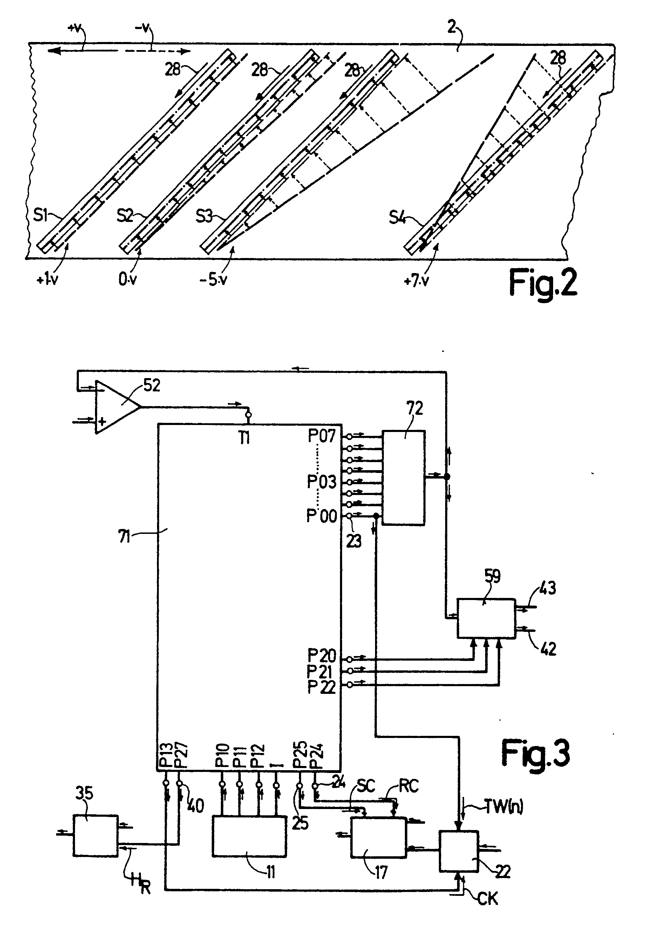

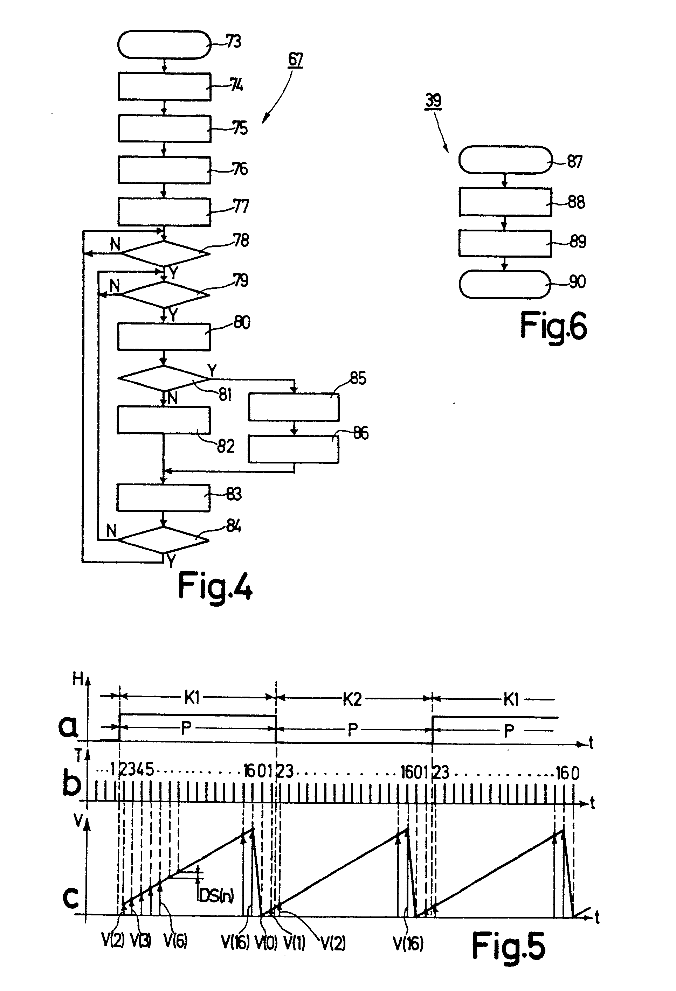

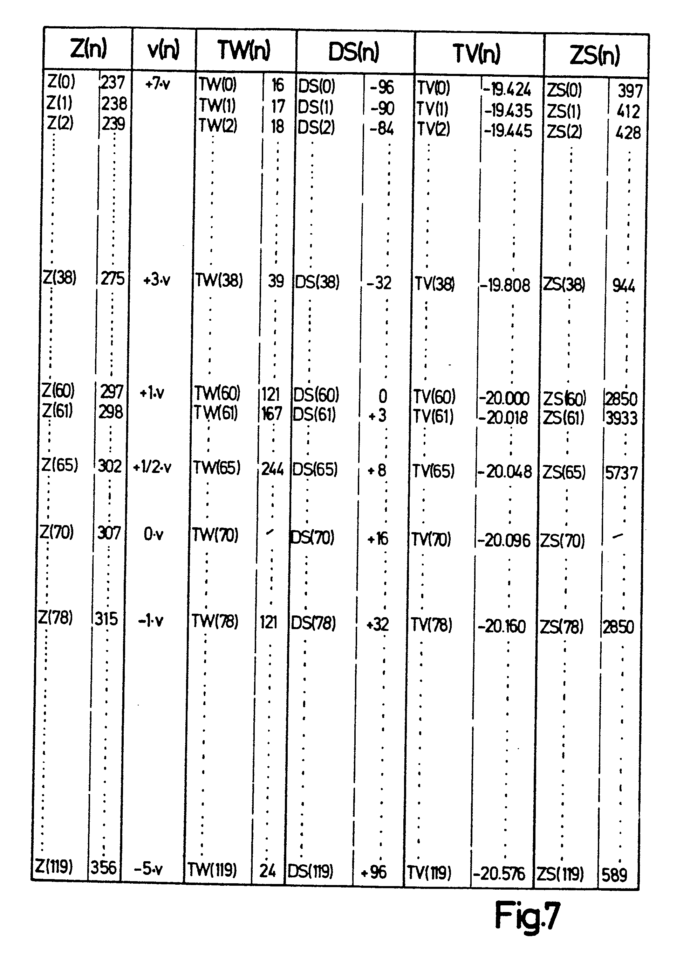

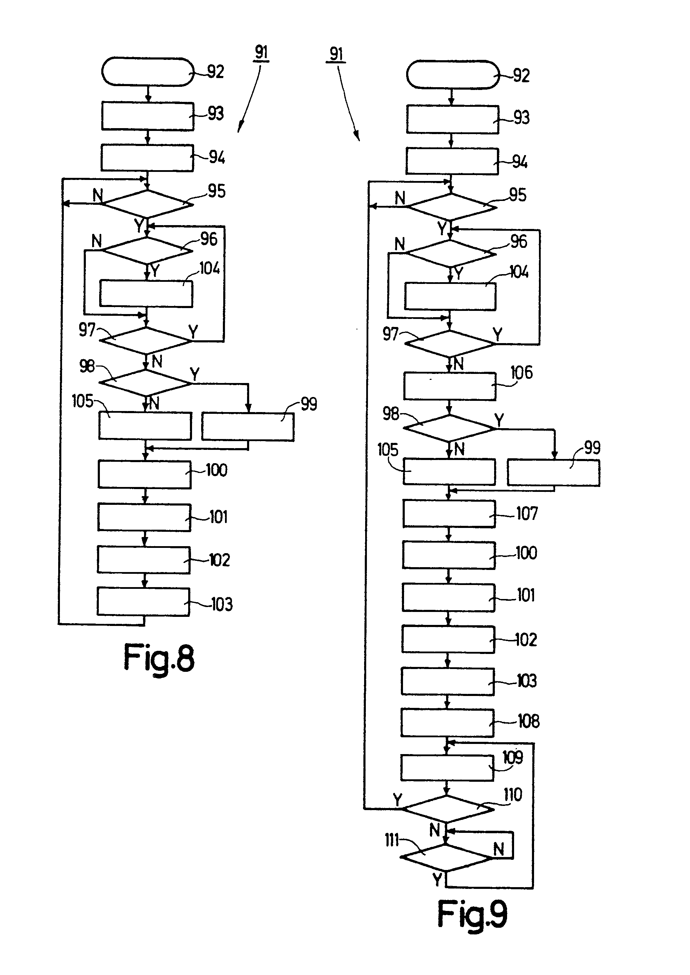

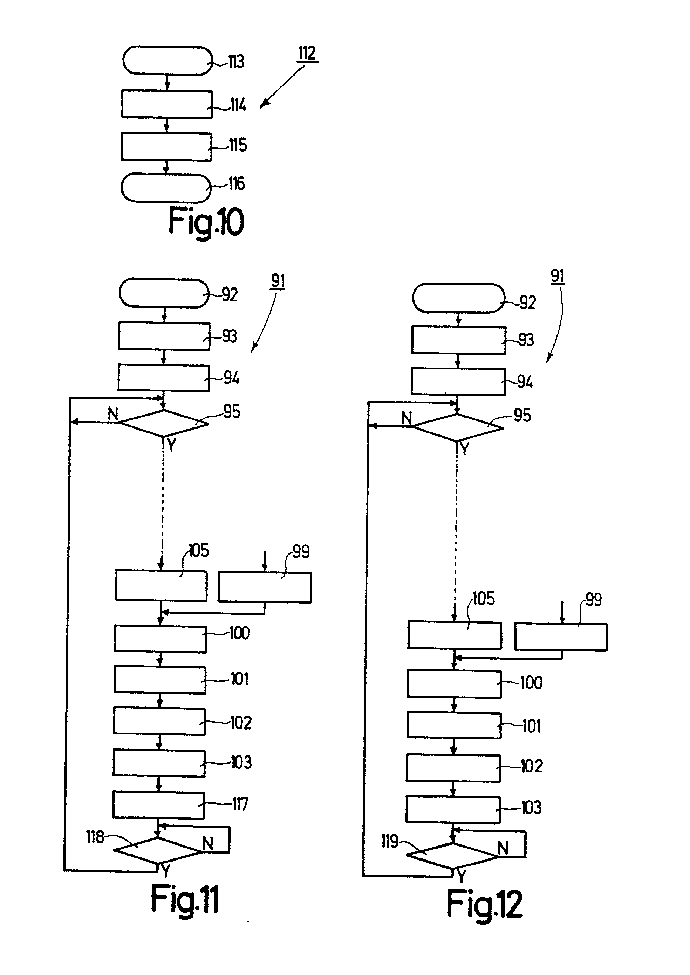

Die Erfindung wird im folgenden anhand einiger in den Zeichnungen dargestellter Ausführungsbeispiele, auf die dieselbe jedoch nicht beschränkt sein soll, näher beschrieben. Die Fig. 1 zeigt schematisch den erfindungswesentlichen Teil eines Systems zum Wiedergeben von auf einem Magnetband in schrägen Spuren gespeicherten Farbfernsehsignalen mit zwei rotierend antreibbaren Magnetköpfen, das eine Schalteinrichtung mit einem Schrittschaltsignalgenerator aufweist, mit dessen bei einem Betriebsartenwechsel in aufeinanderfolgenden Schritten abgegebenen, sich bei jedem Schritt ändernden Schaltsignalen eine Bandantriebseinrichtung zum Antreiben des Magnetbandes, ein Sägezahnsignalgenerator eines Spurfolgeservosystems zum Nachführen der Magnetköpfe entlang der Spuren und eine Kopfantriebseinrichtung zum rotierenden Antreiben der Magnetköpfe schrittweise, in aneinander angepassten Stufen umschaltbar sind. Die Fig. 2 zeigt schematisch die Abtastverhältnisse für die Magnetköpfe beim Abtasten der auf dem Magnetband aufgezeichneten schrägen Spuren bei unterschiedlichen Fortbewegungsgeschwindigkeiten des Magnetbandes. Die Fig. 3 zeigt schematisch einen Teil des Systems gemäss Fig. 1, in dem ein Mikroprozessor zur Realisierung der Schalteinrichtung mit dem Schrittschaltsignalgenerator und des Sägezahnsignalgenerators verwendet ist. Die Fig. 4 zeigt ein Flussdiagramm für einen Programmablauf zur Realisierung eines Sägezahnsignalgenerators mit Hilfe eines Mikroprozessors gemäss Fig. 3. Die Fig. 5 zeigt in den Diagrammen 2a bis 5c Signalverläufe zur Illustration der Funktionsweise des Sägezahnsignalgenerators gamäss dem Programmablauf nach Fig. 4. Die Fig. 6 zeigt ein Flussdiagramm für einen Programmablauf zur Realisierung eines Rechteckimpulsgenerators mit Hilfe eines Mikroprozessors gemäss Fig. 3. Die Fig. 7 zeigt eine Tabelle, in der teilweise die Werte der Schaltsignale des Schrittschaltsignalgenerators und die Werte von Referenzsignalen, die einer mit dem Schrittschaltsignalgenerator zusammenwirkenden Vergleichseinrichtung zuführbar sind, angegeben sind, welche Werte in entsprechender Tabellenform in einem Speicher des Mikroprozessors gemäss Fig. 3 gespeichert sind. Die Fig. 8 zeigt ein Flussdiagramm für einen Programmablauf zur Realisierung eines Schrittschaltsignalgenerators mit Hilfe eines Mikroprozessors gemäss Fig. 3, der die Schaltsignale in Schritten mit gleichem zeitlichen Abstand abgibt. Die Fig. 9 zeigt ein Flussdiagramm für einen Programmablauf zur Realisierung eines Schrittschaltsignalgenerators mit Hilfe eines Mikroprozessors gemäss Fig. 3, der die Schaltsignale in Schritten mit zur Grösse der durch den Wert der Schaltsignale festgelegten Stufen proportionalen zeitlichen Abständen abgibt. Die Fig. 10 zeigt ein Flussdiagramm für einen Programmablauf zur Realisierung einer Detektionseinrichtung zum Detektieren der Fortbewegungsgeschwindigkeit des Magnetbandes mit Hilfe eines Mikroprozessors gemäss Fig. 3. Die Fig. 11 zeigt ein Flussdiagramm zur Realisierung eines Schrittschaltsignalgenerators mit Hilfe eines Mikroprozessors gemäss Fig. 3, der die Schaltsignale in Schritten mit von einer mit Hilfe des Mikroprozessors realisierten Vergleichseinrichtung festgelegten zeitlichen Abständen abgibt, wobei die Vergleichseinrichtung die von der mittels des Flussdiagramms gemäss Fig. 10 realisierten Detektionseinrichtung abgegebenen Detektionssignale mit Referenzsignalen vergleicht, deren im Mikroprozessor in Tabellenform gespeicherte Werte für einige Schritte des Schrittschaltsignalgenerators in der Tabelle gemäss Fig. 7 angegeben sind. Die Fig. 12 zeigt ein Flussdiagramm zur Realisierung eines Schrittschaltsignalgenerators mit Hilfe eines Mikroprozessors gemäss Fig. 3, der die Schaltsignale in Schritten mit von einer gegenüber dem Mikroprozessor externen Vergleichseinrichtung festgelegten zeitlichen Abständen abgibt.

Die Fig. 1 zeigt ein System 1 zum Wiedergeben von auf einem Magnetband 2 gespeicherten Farbfernsehsignalen, die schräg zur Längsrichtung des Magnetbandes verlaufenden, parallel nebeneinander liegenden Spuren S auf dem Magnetband aufgezeichnet sind, wie dies in Fig. 1 symbolisch angedeutet ist. Das Aufzeichnen der Farbfernsehsignale in den Spuren S erfolgte bei einer sogenannten Normalgeschwindigkeit v, wie dies in den Fig. 1 und 2 mit einem mit dem Bezugszeichen v versehenen Pfeil angedeutet ist. In jeder Spur ist dabei ein Halbbild des Farbfernsehsignals aufgezeichnet, und zur Erzielung einer hohen Aufzeichnungsdichte grenzen die Spuren ohne Zwischenraum unmittelbar aneinander an. Die Wiedergabe der Farbfernsehsignale ist mit dem System 1 bei sieben verschiedenen Betriebsarten mit hinsichtlich dem Betrag und dem Vorzeichen unterschiedlichen Fortbewegungsgeschwindigkeiten des Magnetbandes 2 möglich.

Zum Einschalten dieser Betriebsarten weist das System 1 eine Betriebsarten-Wähleinrichtung 3 mit sieben Betriebsartenschaltern 4, 5, 6, 7, 8, 9 und 10 auf. Der Betriebsartenschalter 6 dient zum Einschalten einer sogenannten normalen Wiedergabe, bei der die Fortbewegungsgeschwindigkeit +1.v des Magnetbandes nach Betrag und Vorzeichen mit der Normalgeschwindigkeit v beim Aufzeichnen übereinstimmt. Der Betriebsartenschalter 5 dient zum Einschalten einer sogenannten Zeitraffer-Wiedergabe-Betriebsart, bei der die Fortbewegungsgeschwindigkeit +3.v des Magnetbandes das gleiche Vorzeichen, jedoch einen dreifach grösseren Betrag als die Normalgeschwindigkeit v aufweist. Mit dem Betriebsartenschalter 4 ist eine Wiedergabe-Betriebsart zum schnellen Aufsuchen von zeitlich nach der momentan wiedergegebenen Bildstelle liegenden Bildstellen einschaltbar, bei der die Fortbewegungsgeschwindigkeit +7.v des Magnetbandes das gleiche Vorzeichen, jedoch einen siebenfach grösseren Betrag als die Normalgeschwindigkeit v aufweist. Der Betriebsartenschalter 7 dient zum Einschalten einer sogenannten Zeitlupen-Wiedergabe-Betriebsart, bei der die Fortbewegungsgeschwindigkeit +1/2.v des Magnetbandes das gleiche Vorzeichen, jedoch nur einen halb so grossen Betrag wie die Normalgeschwindigkeit v aufweist. Der Betriebsartenschalter 8 dient zum Einschalten einer Wiedergabe-Betriebsart, die üblicherweise als Stehbild-Wiedergabe-Betriebsart bezeichnet wird, bei der die Fortbewegungsgeschwindigkeit das Magnetbandes- Null ist, wobei also das Magnetband stillsteht. Mit dem Betriebsartenschalter 9 ist eine Wiedergabe-Betriebsart einschaltbar, bei der die Bewegungsabläufe in den wiedergegebenen Bildsignalen in gegenüber einer normalen Wiedergabe umgekehrter Weise erfolgen, wobei die Fortbewegungsgeschwindigkeit −1.v des Magnetbandes den gleichen Betrag, jedoch das entgegengesetzte Vorzeichen wie die Normalgeschwindigkeit v aufweist. Der Betriebsartenschalter 10 dient zum Einschalten einer Wiedergabe-Betriebsart zum schnellen Aufsuchen von zeitlich vor der momentan wiedergegebenen Bildstelle liegenden Bildstellen, bei der die Fortbewegungsgeschwindigkeit −5.v des Magnetbandes einen fünffach grösseren Betrag und das entgegengesetzte Vorzeichen wie die Normalgeschwindigkeit v aufweist. Die sieben Betriebsartenschalter der Betriebsarten-Wähleinrichtung 3 wirken mit einer Eingabeschaltung 11 derselben zusammen, die über vier Ausgangsleitungen eine digitale Schalteinrichtung 12 zum Erzeugen von Schaltsignalen ansteuert. Die Eingabeschaltung 11 besteht in bekannter Weise aus einer Matrixschaltung, bei der die Betätigung eines Betriebsartenschalters mit Hilfe eines Mikrocomputers zyklisch abgefragt und gespeichert wird. Die Eingabeschaltung 11 gibt über die vier Ausgangsleitungen in paralleler Form ein 4-Bit-Status-Wort an die Schalteinrichtung 12 ab, wobei der Wert des Status-Wortes davon abhängig ist, welcher der Betriebsartenschalter betätigt ist. Auf diese Weise ist die Schalteinrichtung 12 von der Betriebsarten-Wähleinrichtung 3 her ansteuerbar. Mit der Schalteinrichtung 12 sind in Abhängigkeit von der Betätigung der Betriebsarten-Wähleinrichtung 3 Schaltsignale erzeugbar, mit der die Schalteinrichtung 12 im System 1 die dem betätigten Betriebsartenschalter der Betriebsarten-Wähleinrichtung entsprechende Betriebsart einschaltet. Die Funktionsweise der Schalteinrichtung 12 ist nachfolgend noch erläutert.

Zum Fortbewegen des Magnetbandes 2 mit unterschiedlichen Fortbewegungsgeschwindigkeiten weist das System 1 eine hinsichtlich der Fortbewegungsgeschwindigkeit umschaltbare Bandantriebseinrichtung 13 auf. Diese umfasst eine rotierend antreibbare Bandantriebswelle 14, an die das Magnetband 2 mit einer auf nicht näher dargestellte Weise verstellbaren Andruckrolle 15 andrückbar ist. Die Bandantriebswelle 14 ist durch die Welle eines Bandantriebsmotors 16 gebildet und somit von diesem rotierend antreibbar. Der Motor 16 ist an den Ausgang einer Bandantriebs-Servoschaltung 17 angeschlossen. Mit der Bandantriebswelle 14 ist eine Scheibe 18 drehfest verbunden, die an ihrem Umfang eine Vielzahl von in Fig. 1 symbolisch dargestellten Magnetpolen aufweist und die bei Rotation der Bandantriebswelle 14 mit ihren Magnetpolen in einem der Umfangsfläche der Scheibe 18 gegenüberliegend angeordneten Magnetkopf 19 ein impulsförmiges Signal induziert, wobei die Frequenz dieses Signals ein Mass für die Rotationsgeschwindigkeit der Bandantriebswelle 14 und damit ein Mass für die tatsächliche Fortbewegungsgeschwindigkeit des Magnetbandes bildet. In der Praxis hat sich als zweckmässig erwiesen, wenn bei der Normalgeschwindigkeit des Magnetbandes die Frequenz dieses Signals etwa im Bereich von 400 Hz liegt. Die Scheibe 18 und der Magnetkopf 19 bilden einen auf magnetische Basis wirksamen Tachogenerator zur Erzeugung eines der tatsächlichen Fortbewegungsgeschwindigkeit des Magnetbandes proportionalen Signales; selbstverständlich können auch Tachogeneratoren auf optischer, induktiver oder kapazitiver Basis Anwendung finden. Das im Magnetkopf 19 induzierte impulsförmige Signal wird einer Impulsverarbeitungsschaltung 20 zugeführt, in der beispielsweise eine Formung der Impulse und eine anschliessende Verstärkung des Signales erfolgt und die das von ihr abgegebene Impulssignal einem Eingang der Servoschaltung 17 als sogenanntes Ist-Signal zuführt. Einem weiteren Eingang der Servoschaltung 17 wird ein von einem Oszillator 21 erzeugtes, mit einem Frequenzteiler 22 frequenzgeteiltes Impulssignal als sogenanntes Soll-Signal zugeführt, welches mit seiner Frequenz die Fortbewegungsgeschwindigkeit des Magnetbandes festlegt. Die Servoschaltung 17 bildet in bekannter und daher nicht näher erläuterter Weise durch Vergleich von Ist-Signal und Soll-Signal ein Regelsignal, das über den Ausgang der Servoschaltung dem Bandantriebsmotor 16 zugeführt wird, so dass dieser über die Bandantriebswelle 14 das Magnetband 2 mit der durch das Soll-Signal festgelegten Fortbewegungsgeschwindigkeit antreibt.

Wie erwähnt, ist die Bandantriebseinrichtung 13 hinsichtlich der Fortbewegungsgeschwindigkeit des Magnetbandes 2 umschaltbar ausgebildet, wobei eine Umschaltung nach Betrag und Vorzeichen der Fortbewegungsgeschwindigkeit möglich ist. Eine betragsmässige Umschaltung der Fortbewegungsgeschwindigkeit ist einfach dadurch realisiert, das der Bandantriebs-Servoschaltung 17 entsprechend den jeweils gewünschten Beträgen der Fortbewegungsgeschwindigkeit des Magnetbandes in ihrer Frequenz unterschiedliche Impulssignale als Soll-Signale zugeführt werden. Um die in ihrer Frequenz unterschiedlichen Soll-Signale auf einfache Weise zu erhalten, ist der dem Oszillator 21 nachgeschaltete Frequenzteiler 22 als in seinem Teilerverhältnis umschaltbarer Frequenzteiler ausgebildet. Ein solcher umschaltbarer Frequenzteiler ist beispielsweise in dem unter der Typenbezeichnung SAB 30 30P im Handel erhältlichen integrierten Baustein der Anmelderin enthalten. Eine solchen umschaltbaren Frequenzteiler 22 sind zum Umschalten seines Teilverhältnisses an einem Steuereingang in ihrem Wert veränderliche Schaltsignale zuführbar, die durch digitale Teilerworte TW(n) gebildet sind, wie dies in Fig. 1 angedeutet ist. Die Teilerworte TW(n) sind durch in ihrem Wert veränderbare Bit-Worte gebildet, die dem Steuereingang des Frequenzteilers 22 in serieller Form zugeführt werden. Es sei noch erwähnt, dass einem solchen Frequenzteiler zum Triggern desselben auch ein Clock-Signal CK zugeführt wird, was in Fig. 1 nur schematisch angedeutet ist. Die dem umschaltbaren Frequenzteiler 22 als Schaltsignale zugeführten Teilerworte TW(n) werden, wie später noch im Detail erläutert ist, von der digitalen Schalteinrichtung 12 erzeugt und von einem Ausgang 23 derselben dem Steuereingang des Frequenzteilers 22 zugeführt. Jedes dieser Teilerworte hat im Frequenzteiler zur Folge, dass ein durch den Wert des Teilerwortes bestimmtes Teilerverhältnis eingeschaltet wird. Zum vorzeichenmässigen Umschalten der Fortbewegungsgeschwindigkeit, wodurch die Fortbewegungsrichtung umgeschaltet wird, gibt die Schalteinrichtung 12 an einem Ausgang 24 ein Schaltsignal RC ab, das einem Steuereingang der Bandantriebs-Servoschaltung 17 zugeführt wird und das bei seinem Auftreten die Servoschaltung 17 so umschaltet, dass das Magnetband in entgegengesetzter Richtung fortbewegt wird, als dies bei einer normalen Wiedergabe der Fall ist. Zusätzlich gibt die Schalteinrichtung 12 an einem Ausgang 25 ein Schaltsignal SC ab, das einem weiteren Steuereingang der Servoschaltung 17 zugeführt wird und das bei seinem Auftreten die Servoschaltung so steuert, dass der Bandantriebsmotor 16 mit Sicherheit stillsteht und folglich keine Fortbewegung des Magnetbandes erfolgt, wie dies für eine Stehbildwiedergabe erforderlich ist.

Bei einem System 1 ist das Magnetband 2 in einem Winkelbereich von etwa 180° in einer schraubenlinienförmigen Bahn über die Mantelflächen von zwei zueinander koaxial angeordneten Trommelhälften 26 und 27 geführt. Die Trommelhälfte 26 ist feststehend angeordnet, wogegen die Trommelhälfte 27 in der mit einem Pfeil 28 angegebenen Drehrichtung rotierend antreibbar ist. An der rotierend antreibbaren Trommelhälfte 27 sind zwei durch den zwischen den beiden Trommelhälften vorgesehenen Spalt hindurch mit dem Magnetband in Wirkverbindung tretende Magnetköpfe K1 und K2 einander diametral gegenüberliegend angeordnet, die zum aufeinanderfolgenden Abtasten der auf dem Magnetband aufgezeichneten Spuren S und zum Wiedergeben der in diesen Spuren gespeicherten Farbfernsehsignale dienen. Hierbei ist aufgrund der diametralen Anordnung der Magnetköpfe und der gewählten Umschlingung des Magnetbandes um die beiden Trommelhälften 26 und 27 von etwa 180° im wesentlichen immer nur ein Magnetkopf für eine Abtastperiode P mit dem Magnetband in Wirkverbindung, da ein Magnetkopf mit dem Magnetband in Berührung tritt, wenn der andere Magnetkopf nach erfolgter Abtastung vom Magnetband abhebt. Die Abtastperiode P ist selbstverständlich von der Drehzahl der Magnetköpfe abhängig und entspricht im Falle einer normalen Wiedergabe dem Reziprokwert der Halbbildwechsel- bzw. Vertikalsynchronisationssignal-Frequenz eines Farbfernsehsignals. Beispielsweise bei der normalen Wiedergabe in einem System für PAL-Fernsehsignale beträgt die Abtastperiode P für jeden Magnetkopf K1 bzw. K2 jeweils 20 ms. Die beiden Magnetköpfe K1 und K2 sind in bekannter Weise über einen der Einfachheit halber nicht dargestellten rotierenden Transformator mit einer Signalleitung 29 verbunden, über die die von den Magnetköpfen abgetasteten Farbfernsehsignale einer Signalverarbeitungsschaltung 30 zum Verarbeiten und Aufbereiten derselben zugeführt werden. Die Signalverarbeitungsschaltung 30 stellt die von ihr für eine Wiedergabe am Bildschirm eines Farbfernsehempfängers verarbeiteten und aufbereiteten Signale an ihrer Ausgangsklemme 31 zur Verfügung.

Zum rotierenden Antreiben der beiden an der Trommelhälfte 27 angebrachten Magnetköpfe K1 und K2 ist eine Kopfantriebseinrichtung 32 vorgesehen, die einen Kopfantriebsmotor 33 aufweist, der über eine Welle 34 die Trommelhälfte 27 in Richtung des Pfeiles 28 rotierend antreibt. Hierbei ist der Kopfantriebsmotor 32 an den Ausgang einer Kopfantriebs-Servoschaltung 35 angeschlossen. Mit der Welle 34 ist eine Scheibe 36 drehfest verbunden, die an ihrem Umfang einen einzigen symbolisch dargestellten Magnetpol aufweist und die bei Rotation der Welle 34 mit ihrem Magnetpol in einem der Umfangsfläche der Scheibe 36 gegenüberliegend angeordneten weiteren Magnetkopf 37 ein impulsförmiges Signal induziert. Selbstverständlich sind anstelle des durch die Scheibe 36 und den Magnetkopf 37 gebildeten, auf magnetischer Basis wirksamen Tachogenerators auf anderen Wirkungsprinzipien beruhende Tachogeneratoren verwendbar. Das im Magnetkopf 37 induzierte impulsförmige Signal wird einer weiteren Impulsverarbeitungsschaltung 38 zugeführt, in der beispielsweise eine Formung der Impulse und anschliessende Verstärkung des Signals erfolgt und die das von ihr abgegebene Impulssignal einem Eingang der Servoschaltung 35 als Ist-Signal zuführt. Einem weiteren Eingang der Servoschaltung 35 wird ein von einem Impulsgenerator 39 erzeugtes, an einem Ausgang 40 desselben abgegebenes Impulssignal $H_R$ als Soll-Signal zugeführt, welches die Drehzahl der Magnetköpfe K1 und K2 . Die Periodendauer dieses als Soll-Signal dienenden Impulssignales $H_R$ entspricht im vorliegenden Fall dem zweifachen Wert der Abtastperiode P, während der ein Magnetkopf K1 bzw. K2 zum Abtasten einer Spur mit dem Magnetband in Wirkverbindung steht, und beträgt daher bei einer normalen Wiedergabe in einem System für PAL-Farbfernsehsignale 40 ms. Die Kopfantriebsservoschaltung 35 bildet in bekannter und daher nicht näher erläuterter Weise durch einen Phasenvergleich zwischen dem Ist-Signal und dem Soll-Signal ein Regelsignal, das über den Ausgang der Servo-Schaltung dem Kopfantriebsmotor 33 zugeführt wird, so dass dieser über die Welle 34 die Magnetköpfe K1 und K2 mit der durch das Soll-Signal festgelegten Drehzahl antreibt. Es sei noch erwähnt, dass in der Praxis zur Erzielung einer höheren Regelstabilität und einer grösseren Regelbandbreite die Kopfantriebs-Servoschaltung 35 neben dem erwähnten Phasenregelkreis zusätzlich einen sogenannten Geschwindigkeitsregelkreis aufweist. Hierfür ist an der Welle 34 des Kopfantriebsmotors 33 noch ein weiterer Tachogenerator vorgesehen, der ein gegenüber dem Tachosignal des Tachogenerators 36, 37 höherfrequenteres impulsförmiges Tachosignal als Ist-Signal dem Geschwindigkeitsregelkreis der Kopfantriebs-Servoschaltung 35 zuführt, wobei dann dieser Geschwindigkeitsregelkreis ein zusätzliches Regelsignal für den Kopfantriebsmotor 33 erzeugt. Dies ist aber, da es für die Erfindung unwesentlich ist, hier der Einfachheit halber nicht dargestellt.

Die beiden Magnetköpfe K1 und K2 dienen zum aufeinanderfolgenden Abtasten der auf dem Magnetkopf aufgezeichneten schrägen Spuren S. In Fig. 2 ist eine dieser Spuren mit S1 bezeichnet und als ein mit vollen Linien gezeichnetes Rechteck dargestellt, wobei die Spurmitte mit einer strichpunktierten Linie angegeben ist. Mit strichlierten Linien ist hierbei in vereinfachter Weise die Abtastbahn eines entsprechend dem Pfeil 28 rotierend angetriebenen Magnetkopfes K1 bzw. K2 dargestellt, die derselbe ohne separate Massnahmen überstreicht, wenn das Magnetband 2 beim Wiedergeben ebenso wie beim Aufzeichnen der Spuren von der Bandantriebseinrichtung 13 mit der Normalgeschwindigkeit +1.v fortbewegt wird. Wie ersichtlich, weist diese Abtastbahn gegenüber der Spurmitte eine im Mittel gleich gross bleibende mittlere Spurabweichung auf, die symbolisch durch mit vollen Linien dargestellte Pfeile angedeutet ist. Es ist klar, dass in der Praxis die Grösse der tatsächlichen Spurabweichung über die Gesamtlänge einer Spur nicht konstant ist, sondern variiert. Diese Grössenvariationen der tatsächlichen Spurabweichung gegenüber der mittleren Spurabweichung sind aber relativ klein, so dass der Einfachheit halber bei den nachfolgenden Erläuterungen stets nur die mittlere Spurabweichung betrachtet wird. Eine solche Spurabweichung ergibt sich bekanntlich beispielsweise aufgrund von Dehnungen des Magnetbandes, durch Temperatur-, Feuchtigkeits- und Toleranzeinflüsse und auch bei sogenannten Fremdaufnahmen, wobei das Aufzeichnen der Spuren mit einem anderen System als dem System zum Wiedergeben erfolgte. In Relation zu einer mit S2 bezeichneten Spur ist mit strichlierten Linien die Abtastbahn eines Magnetkopfes K1 bzw. K2 dargestellt, die derselbe ohne separate Massnahmen überstreicht, wenn das Magnetband 2 beim Wiedergeben nicht fortbewegt wird, also stillsteht, wie dies bei einer Stehbildwiedergabe der Fall ist. Wie ersichtlich, weist diese Abtastbahn aufgrund der gegenüber dem Wiedergeben bei Normalgeschwindigkeit geänderten Abtastverhältnisse gegenüber der Spurmitte eine Spurabweichung auf, die sich aus zwei Komponenten zusammensetzt, und zwar aus der symbolisch durch mit vollen Linien dargestellte Pfeile angedeuteten, im Mittel gleich gross bleibenden mittleren Spurabweichungskomponente und aus einer durch mit strichlierten Linien dargestellte Pfeile angedeuteten, sich in der Grösse linear ändernden Spurabweichungskomponente. In Relation zu einer weiteren mit S3 bezeichneten Spur ist mit strichlierten Linien die Abtastbahn eines Magnetkopfes K1 bzw. K2 dargestellt, die derselbe ohne separate Massnahmen überstreicht, wenn das Magnetband beim Wiedergeben mit einer dem fünffachen Betrag der Normalgeschwindigkeit entsprechenden Fortbewegungsgeschwindigkeit (−5v) in gegenüber der normalen Wiedergabe entgegengesetzter Richtung fortbewegt wird. Auch in diesem Fall setzt sich die Spurabweichung aus zwei Komponenten zusammen, wobei aber die sich in der Grösse linear ändernde Spurabweichungskomponente einen anderen Verlauf aufweist. In Relation zu einer weiteren mit S4 bezeichneten Spur ist mit strichlierten Linien die Abtastbahn eines Magnetkopfes K1 bzw. K2 dargestellt, die derselbe ohne separate Massnahmen überstreicht, wenn das Magnetband beim Wiedergeben mit einer dem siebenfachen Betrag der Normalgeschwindigkeit entsprechenden Fortbewegungsgeschwindigkeit (+7v) in der gleichen Richtung wie bei der normalen Wiedergabe fortbewegt wird. Auch in diesem Fall weist die sich in ihrer Grösse linear ändernde Spurabweichungskomponente wieder einen anderen Verlauf auf. Es ist bekannt, dass der Verlauf der sich in ihrer Grösse linear ändernden Spurabweichungskomponente sich korrespondierend zur jeweiligen Fortbewegungsgeschwindigkeit des Magnetbandes ergibt.

Selbstverständlich haben die vorstehend erläuterten Spurabweichungen ohne separate Massnahmen Störungen bei der Wiedergabe der in den Spuren gespeicherten Farbfernsehsignale zur Folge, weil die Magnetköpfe bei Spurabweichungen die in den Spuren aufgezeichneten Farbfernsehsignale nur teilweise bzw. gar nicht aus den Spuren auslesen können. Um solche Spurabweichungen zu eliminieren, enthält das System 1 zum Nachführen der beiden Magnetköpfe K1 und K2 entlang der auf dem Magnetband aufgezeichneten Spuren S ein Spurfolgeservosystem 41, das zum Verstellen jedes der beiden Magnetköpfe K1 bzw. K2 quer zu den Spuren S, um anstelle der in Fig. 2 mit strichlierten Linien dargestellten Abtastbahnen der Magnetköpfe sich mit den mit strichpunktierten Linien dargestellten Spurmitten überdeckende Abtastbahnen zu erreichen, je eine elektromechanische Verstelleinrichtung A1 bzw. A2 aufweist, die beispielsweise je durch ein piezoelektrisches, bimorphes Biegeelement gebildet sind. Den Biegeelementen A1 und A2 ist über ein ebenfalls der Einfachheit halber nicht dargestelltes Schleifringsystem je ein über Zufuhrleitungen 42 und 43 dem Schleifringsystem zugeführtes Stellsignal zum Auslenken der Biegeelemente zuführbar, welche in Reaktion auf das zugeführte Stellsignal die Magnetköpfe genau entlang der aufgezeichneten Spuren führen. Das Stellsignal setzt sich aus einem in einem Regelkreis 44 des Spurfolgeservosystems 41 gewonnenen, zum Ausgleich der im Mittel gleich gross bleibenden mittleren Spurabweichungskomponente dienenden Regelsignal und aus einem im Signalverlauf der Fortbewegungsgeschwindigkeiten des Magnetbandes angepassten, zum Ausgleich der sich in der Grösse linear ändernden Spurabweichungskomponente, deren Verlauf sich korrespondierend zu dan Fortbewegungsgeschwindigkeiten des Magnetbandes ändert, vorgesehenen sägezahnförmigen Steuersignal zusammen.

Im Hinblick auf den Regelkreis 44 des Spurfolgeservosystems 41 ist darauf zu verweisen, dass ein solcher Regelkreis in der DE-OS 30 07 874 detailliert beschrieben ist, so dass derselbe hier nur mehr kurz erläutert wird. Der Regelkreis 44 enthält eine an die Signalleitung 29 angeschlossene Detektionsschaltung 45, mit der die Lage jedes Magnetkopfes K1 bzw. K2 in bezug auf die vom Magnetkopf abzutastende Spur detektiert wird und die in Abhängigkeit von der detektierten Spurabweichung ein entsprechendes Detektionssignal erzeugt. In der Regel werden zum Detektieren von Spurabweichungen der Magnetköpfe in den Spuren zugleich mit den Informationssignalen gegenüber diesen langwellige Spurfolgesignale aufgezeichnet, die von Spur zu Spur eine sich gemäss einem vorgegebenen Muster ändernde Frequenz und/oder Phase aufweisen. Beim Abtasten einer Spur durch einen Magnetkopf wird dann durch einen Vergleichsvorgang zwischen den von den zur abgetasteten Spur benachbarten Spuren als Ubersprechsignale vom Magnetkopf abgetasteten Spurfolgesignalen in der Detektionsschaltung 45 das der detektierten Spurabweichung entsprechende Detektionssignal erzeugt. Hinsichtlich der Realisierung solcher Detektionsschaltungen ist beispielsweise auf die DE-OS 25 30 482, DE-OS 27 01 318, DE-OS 28 09 402 oder AT-PS 368.822 zu verweisen.

Der Regelkreis 44 enthält ferner eine digitale Speichereinrichtung 46 zur Speicherung einer vorgegebenen Anzahl von Signalwerten in digital kodierter Form, die beispielsweise durch ein digitales Schieberegister gebildet sein kann. Die Speichereinrichtung 46 stellt die von ihr gespeicherten digitalen Signalwerte im Takte von Taktimpulsen T, die vom Impulsgenerator 39 erzeugt und von einem Ausgang 47 desselben einem Steuereingang der Speichereinrichtung zugeführt werden, an ihrem Ausgang zur Verfügung. An den Ausgang der Speichereinrichtung 46 ist über eine schematisch dargestellte Bus-Verbindung 48 ein Digital/Analog-Umsetzer 49 zum Umsetzen der angebotenen digitalen Signalwerte in Analogwerte und eine Korrektureinrichtung 50 angeschlossen, die jeden ihrem Eingang zugeführten, von der Speichereinrichtung abgegebenen digitalen Signalwert zur Korrektur desselben in Abhängigkeit von einem einem Steuereingang der Korrektureinrichtung zugeführten Korrektursignal um einen vorgegebenen Bit-Wert erhöht oder erniedrigt. Der Ausgang der Korrektureinrichtung 50 ist über eine Bus-Verbindung 51 mit dem Eingang der Speichereinrichtung 46 verbunden, wobei über diese Bus-Verbindung 51 die von der Korrektureinrichtung 50 korrigierten digitalen Signalwerte als Ersatz der von der Speichereinrichtung zuvor abgegebenen digitalen Signalwerte der Speichereinrichtung zugeführt werden. Zur Erzeugung des dem Steuereingang der Korrektureinrichtung 50 zugeführten Korrektursignales ist ein Komparator 52 vorgesehen, dem einerseits das von der Detektionsschaltung 45 erzeugte, die momentane Spurabweichung eines Magnetkopfes K1 bzw. K2 repräsentierende Detektionssignal und andererseits das vom Digital/Analog-Umsetzer 49 abgegebene, den in der Speichereinrichtung 46 gespeicherten digitalen Signalwerten entsprechende Analogsignal zugeführt wird. Wenn das Detektionssignal grösser als das Analogsignal ist, dann gibt der Komparator 52 ein Korrektursignal ab, welches die Korrektureinrichtung 50 zur Erhöhung des ihr angebotenen digitalen Signalwertes um den vorgegebenen Bit-Wert veranlasst. Wenn hingegen das Detektionssignal kleiner als das Analogsignal ist, dann gibt der Komparator 52 ein Korrektursignal ab, welches die Korrektureinrichtung zur Erniedrigung des ihr angebotenen digitalen Signalwertes um den vorgegebenen Bit-Wert veranlasst. Auf diese Weise ist erreicht, dass in der Speichereinrichtung 46 digitale Signalwerte gespeichert sind, die den Verlauf der Spurabweichung eines Magnetkopfes K1 bzw. K2 darstellen. Die Speichereinrichtung 46 ist dabei hinsichtlich der Anzahl der Speicherplätze so ausgebildet, dass dieselbe den Verlauf der Spurabweichungen für beide Magnetköpfe K1 und K2 in zwei vollständigen, aufeinanderfolgenden Abtastperioden P derselben mit digitalen Signalwerten speichert.

Zur Steuerung der Speichereinrichtung 46, um den zeitlichen Funktionsablauf in derselben mit den Abtastperioden P der Magnetköpfe K1 bzw. K2 zu synchronisieren, wird ein vom Impulsgenerator 39 erzeugtes, an einem Ausgang 53 desselben abgegebenes Impulssignal H einem weiteren Steuereingang der Speichereinrichtung 46 zugeführt. Das Impulssignal H weist stets dieselbe Frequenz wie das am Ausgang 40 des Impulsgenerators 39 abgegebene, der Kopfantriebs-Servoschaltung 35 als Soll-Signal zugeführte Impulssignal $H_R$ auf und ist gegenüber dem Impulssignal $H_R$ so in der Phasenlage verschoben, dass die Impulsflanken des Impulssignales H immer zu jenen Zeitpunkten auftreten, bei denen ein sogenannter Kopfwechsel auftritt, wobei einer der beiden Magnetköpfe seinen Abtastvorgang beendet und der andere der beiden Magnetköpfe seinen Abtastvorgang beginnt. Beispielsweise weist das Impulssignal H eine steigende Flanke auf, wenn der Magnetkopf K1 eine Abtastung einer Spur beginnt, und eine fallende Flanke, wenn der Magnetkopf K2 eine Abtastung einer Spur beginnt. Das Impulssignal H wird auch einem Steuereingang der digitalen Schalteinrichtung 12 zu Synchronisationszwecken zugeführt, worauf später noch detailliert eingegangen wird. Zu erwähnen ist hinsichtlich der am Ausgang 47 des Impulsgenerators 39 abgagebenen Taktimpulse T noch, dass deren Frequenz stets ein Vielfaches der Frequenz der Impulssignale H bzw. $H_R$ ist. In der Praxis hat sich beispielsweise als zweckmässig erwiesen, wenn die Frequenz de Taktimpulse T um einen Faktor 32 grösser ist als die Frequenz der Impulssignale H bzw. $H_R$. Hierbei treten dann in einer halben Periode des Impulssignales H, die einer Abtastperiode P der Magnetköpfe K1 bzw. K2 entspricht, sechzehn Taktimpulse T auf, was bedeutet, dass der Verlauf der Spurabweichung jedes Magnetkopfes K1 bzw, K2 mittels sechzehn digitalen Signalwerten in der Speichereinrichtung 46 gespeichert ist.

An eine Abzweigung der Speichereinrichtung 46 ist über eine Bus-Verbindung 54 ein erster Eingang einer digitalen Summierschaltung 55 angeschlossen, deren Ausgang über eine weitere Bus-Verbindung 56 mit einem weiteren Digital/Analog-Umsetzer 57 verbunden ist, Die Speichereinrichtung 46 gibt an ihrer Abzweigung in gegenüber dem Ausgang derselben zeitlich voreilender Weise, wodurch nachfolgend auftretende Laufzeitverzögerungen ausgeglichen werden, die gespeicherten digitalen Signalwerte zur Bildung des den Biegeelementen A1 bzw. A2 zuzuführenden Regelsignalanteils des Stellsignals für dieselben ab. Diese digitalen Signalwerte werden über die Summierschaltung 55, deren Zweck noch später erläutert ist, dem Digital-Analog-Umsetzer 57 zum Umsetzen in Analogwerte zugeführt. Dem Digital/Analog-Umsetzer 57 ist zur Bandbreitenbegrenzung und zur Signalformung ein Tiefpass 58 nachgeschaltet, dessen Ausgangssignal über eine Schaltstufeneinrichtung 59 den zu den Biegeelementen A und A2 führenden Zufuhrleitungen 42 und 43 zur Weiterleitung zu den Biegeelementen zugeführt wird.

Die Schaltstufeneinrichtung 59 weist eine erste Schaltstufe 60 auf, der an einem Steuereingang derselben das vom Impulsgenerator 39 an dessen Ausgang 53 abgegebene Impulssignal H zugeführt wird. Die Schaltstufe 60 sorgt in Abhängigkeit des Impulssignales H dafür, dass während einer mit einer steigenden Flanke desselben beginnenden Halbperiode des Impulssignales H das vom Tiefpass 58 abgegebene Stellsignal gemäss der in Fig. 1 symbolisch dargestellten Schalterstellung über die Zufuhrleitung 42 dem Biegeelement A1 zugeführt wird und in der darauffolgenden mit einer fallenden Flanke beginnenden Halbperiode des Impulssignales H das vom Tiefpass 58 abgegebene Stellsignal über die Zufuhrleitung 43 dem Biegeelement A2 zugeführt wird. Die Schaltstufeneinrichtung 59 weist ferner eine zweite Schaltstufe 61 und eine dritte Schaltstufe 62 auf. Die zweite Schaltstufe 61 wird über einen Steuereingang derselben von einem vom Impulsgenerator 39 an einem Ausgang 63 desselben abgegebenen Impulssignal H1 gesteuert. Das Impulssignal H1 weist jeweils dann, wenn der Magnetkopf K1 mit der Abtastung einer Spur beginnt, einen kurzzeitigen Impuls auf, der die zweite Schaltstufe 61 kurzzeitig in den leitenden Zustand steuert, wodurch der während dieses Impulses vom Tiefpass 58 abgegebene Stellsignalwert in eine der zweiten Schaltstufe 61 nachgeschaltete Speicherstufe 64 übernommen wird. Der in der Speicherstufe 64 gespeicherte Stellsignalwert wird über die erste Schaltstufe 60 dem Biegeelement A1 zum Verstellen des Magentkopfes K1 über die Zufuhrleitung 42 dann zugeführt, wenn der Magnetkopf K2 eine Spur abtastet und hierbei der Magnetkopf K1 nicht in Kontakt mit dem Magnetband steht. In Analogie hierzu wird die dritte Schaltstufe 62 über einen Steuereingang derselben von einem vom Impulsgenerator 39 an einem Ausgang 65 desselben abgegebenen Impulssignal H2 gesteuert. Das Impulssignal H2 weist jeweils dann, wenn der Magnetkopf K2 mit einer Abtastung einer Spur beginnt, einen kurzzeitigen Impuls auf, der die dritte Schaltstufe 62 kurzzeitig in den leitenden Zustand steuert, wodurch der während dieses Impulses vom Tiefpass 58 abgegebene Stellsignalwert in eine der dritten Schaltstufe 62 nachgeschaltete Speicherstufe 66 übernommen wird. Der in der Speicherstufe 66 gespeicherte Stellsignalwert wird über die erste Schaltstufe 60 dem Biegeelement A2 zum Verstellen des Magnetkopfes K2 über die Zufuhrleitung 43 dann zugeführt, wenn der Magnetkopf K1 eine Spur abtastet und hierbei den Magnetkopf K2 nicht in Kontakt mit dem Magnetband steht.

Zur Erzeugung des sägezahnförmigen Steuersignales, welches im Signalverlauf den Fortbewegungsgeschwindigkeiten des Magnetbandes angepasst ist und zum Ausgleich der sich in der Grösse linear ändernden Spurabweichungskomponente dient, weist das Spurfolgeservosystem 41 einen hinsichtlich des Signalverlaufes umschaltbaren digitalen Sägezahnsignalgenerator 67 auf, dem an einem Steuereingang zur zeitlichen Synchronisation der Erzeugung des sägezahnförmigen Steuersignales mit den Abtastperioden P der Magnetköpfe K1 und K2 das vom Impulsgenerator 39 an dessen Ausgang 53 abgegebene Impulssignal H zugeführt wird. Ferner werden dem Sägezahnsignalgenerator 67 an einem weiteren Steuereingang die vom Impulsgenerator an dessen Ausgang 47 abgegebenen Taktimpulse T zugeführt. Zum Umschalten des Sägezahnsignalgenerators 67 sind demselben an einem weiteren Steuereingang von der Schalteinrichtung 12 an einem Ausgang 68 von derselben abgegebene, in ihrem Wert veränderliche Schaltsignale zuführbar. Diese Schaltsignale sind in vorliegendem Fall durch digitale Differenzsignalwerte DS(n) gebildet, die aus in ihrem Wert veränderbaren Bit-Worten bestehen. Durch die Auswahl eines bestimmten Differenzsignalwertes DS(n), was in der Schalteinrichtung 12 automatisch korrespondierend zu der von der Schalteinrichtung 12 mit dem am Ausgang 23 von derselben abgegebenen Schaltsignal TW(n) festgelegten Fortbewegungsgeschwindigkeit erfolgt, wird erreicht, dass der Sägezahnsignalgenerator 67 ein dieser Fortbewegungsgeschwindigkeit angepasstes sägezahnförmiges Steuersignal erzeugt. Die Funktionsweise des Sägezahnsignalgenerators 67 zur Erzeugung eines sägezahnförmigen Steuersignales ist im Detail noch nachstehend genau erläutert.

Das vom Sägezahnsignalgenerator erzeugte Steuersignal wird vom Ausgang desselben über eine Bus-Verbindung 69 einem zweiten Eingang der Summierschaltung 55 zugeführt, die das sägezahnförmige Steuersignal des Sägezahnsignalgenerators zu dem von der Speichereinrichtung 46 abgegebenen Regelsignal hinzuaddiert und das Summensignal als Stellsignal in bereits beschriebener Weise über den Digital/Analog-Umsetzer 57, den Tiefpass 58 und die Schaltstufeneinrichtung 59 den Biegeelementen A1 und A2 zuführt. Die Biegeelemente A1 und A2 werden durch die ihnen zugeführten Stellsignale so ausgelenkt, dass sie die Magnetköpfe K1 und K2 stets genau entlang der abzutastenden Spuren führen. Aufgrund der zu jeder Fortbewegungsgeschwindigkeit des Magnetbandes angepassten Erzeugung eines sägezahnförmigen Steuersignales ist dabei gewährleistet, dass die Magnetköpfe bei jeder Fortbewegungsgeschwindigkeit des Magnetbandes genau entlang der abzutastenden Spuren nachgeführt werden.

Wie aus Fig. 2 ersichtlich ist, stimmen die Längen der Abtastbahnen der Magnetköpfe bei Wiedergabe-Betriebsarten mit von der Normalgeschwindigkeit abweichenden Fortbewegungsgeschwindigkeiten nicht mit den Längen der aufgezeichneten Spuren überein, was damit gleichbedeutend ist, dass gegenüber den aufgezeichneten Farbfernsehsignalen in den von den Magnetköpfen bei von der Normalgeschwindigkeit abweichenden Fortbewegungsgeschwindigkeiten wiedergegebenen Farbfernsehsignalen ohne separate Massnahmen Zeitbasisfehler enthalten sind. Dies bedeutet, dass die Horizontalsynchronisationssignal-Frequenz in den wiedergegebenen Farbfernsehsignalen vom vorgegebenen Normwert abweicht, was insbesondere bei Farbfernsehsignalen zu Störungen bei der Verarbeitung des Farbsignalanteiles führt. Diese problematik ist für den Fall der Stehbild-Wiedergabe-Betriebsart beispielsweise bereits in der DE-OS 27 41 892, der DE-AS 26 46 579 und der DE-OS 23 48 907 detailliert erläutert.

Eine Vermeidung derartiger Zeitbasisfehler ist dadurch erreichbar, dass die Drehzahl der Magnetköpfe K1 und K2 korrespondierend zur jeweiligen Fortbewegungsgeschwindigkeit des Magnetbandes umgeschaltet wird. Hierfür muss also die Kopfantriebseinrichtung 32 hinsichtlich der Drehzahl umschaltbar ausgebildet sein, was bei dem in Fig. 1 dargestellten System 1 in einfacher Weise dadurch erzielt ist, dass das der Kopfantriebs-Servoschaltung 35 als Soll—Signal zugeführte Impulssignal $H_R$ hinsichtlich der Periodendauer korrespondierend zur jeweiligen Fortbewegungsgeschwindigkeit umgeschaltet wird. Die Kopfantriebs-Servoschaltung 35 bildet nämlich entsprechend der Periodendauer der als Soll-Signale zugeführten Impulssignale durch den vorstehend bereits erwähnten Phasenvergleich mit dem vom Tachogenerator 36, 37 gelieferten Ist-Signal unterschiedliche, dem Kopfantriebsmotor zugeführte Regelsignale, die eine durch die Periodendauer der als Soll-Signale zugeführten Impulssignale festgelegte Drehzahl der Magnetköpfe zur Folge haben.

Zur Erzeugung von in der Periodendauer umschaltbaren Soll-Signalen ist der Impulsgenerator 39 hinsichtlich der Periodendauer der von ihm erzeugten Impulse umschaltbar ausgebildet. Zum Umschalten des Impulsgenerators sind einem Steuereingang desselben von der Schalteinrichtung 12 an einem Ausgang 70 von derselben abgegebene, in ihrem Wert veränderliche Schaltsignale zuführbar. Diese Schaltsignale sind in vorliegendem Fall durch digitale Timervorgabewerte TV(n) gebildet, die aus in ihrem Wert veränderbaren Bit-Worten bestehen. Durch die Auswahl eines bestimmten Timervorgabewertes TV(n), was in der Schalteinrichtung 12 automatisch korrespondierend zu der von der Schalteinrichtung mit dem am Ausgang 23 von derselben abgegebenen Schaltsignal TW(n) festgelegten Fortbewegungsgeschwindigkeit und korrespondierend zu dem von der Schalteinrichtung mit dem am Ausgang 68 von derselben abgegebenen Schaltsignal DS(n) festgelegten Steuersignalverlauf erfolgt, wird erreicht, dass der Antrieb der Magnetköpfe K1 und K2 mit einer dieser Fortbewegungsgeschwindigkeit und diesem Steuersignalverlauf angepassten Drehzahl erfolgt. Auf diese Weise ist erreicht, dass bei jeder Fortbewegungsgeschwindigkeit des Magnetbandes die Magnetköpfe mit einer angepassten Abtastgeschwindigkeit genau entlang der abzutastenden Spuren nachgeführt werden, so dass stets eine ungestörte, zeitbasisfehlerfreie, einwandfreie Wiedergabe der gespeicherten Farbfernsehsignale gewährleistet ist.

Zu erwähnen ist noch, dass durch die Zufuhr der Schaltsignale TV(n) zum Steuereingang des Impulsgenerators 39 nicht nur das als Soll-Signal verwendete Impulssignal $H_R$, sondern in hierzu genau entsprechender Weise auch alle anderen vom Impulsgenerator 39 erzeugten Impulssignale T, H, H1 und H2 hinsichtlich ihrer Periodendauer umgeschaltet werden. Dies ist deshalb erforderlich, weil durch die unterschiedlichen Drehzahlen der Magnetköpfe sich auch die Abtastperioden P der Magnetköpfe ändern und daher auch die von den weiteren Impulssignalen des Impulsgenerators 39 angesteuerten Schaltungsteile, nämlich die Schalteinrichtung 12, die Speichereinrichtung 46, der Sägezahnsignalgenerator 67 und die Schaltstufeneinrichtung 59 aus Synchronisationsgründen in ihrem zeitlichen Funktionsablauf an die unterschiedlichen Abtastperioden P der Magnetköpfe angepasst werden müssen. Die Funktionsweise des Impulsgenerators 39 zur Erzeugung der von ihm abgegebenen Impulssignale ist im Detail noch nachstehend genau erläutert.

Es ist festzuhalten, dass es sich in der Praxis als besonders zweckmässig und einfach erwiesen hat, den in Fig. 1 mit einer strichlierten Linie umrandeten und mit dem Bezugszeichen 71 versehenen Schaltungsteil mit einer programmierbaren Datenverarbeitungseinheit, wie einem Mikroprozessor, zu realisieren. In Fig. 3 ist eine für die Praxis getroffene Realisierungsmöglichkeit dargestellt, wobei als Mikroprozessor 71 der unter der Typenbezeichnung 8051 im Handel befindliche Mikroprozessor der Firma INTEL vorgesehen ist. In Fig. 3 sind hierbei die PIN-Bezeichnungen des Mikroprozessors 8051 teilweise abgegeben, die übrigen angeführten Bezugszeichen sind analog zum System gemäss Fig. 1 gewählt. Zu erwähnen ist hierzu noch, dass anstelle von zwei Digital/Analog-Umsetzern gemäss dem System nach Fig. 1 bei Anwendung eines Mikroprozessors auch mit nur einem Digital/Analog-Umsetzer 72 das Auslangen gefunden wird, wobei dann die zeitlich verschobene Ausgabe der gespeicherten digitalen Signalwerte für die Stellsignalerzeugung bzw. für die Komparatorsignalerzeugung durch entsprechende programmmässige Ansteuerung der betreffenden Speicherplätze erreichbar ist. Als Digital/Analog-Umsetzer hat sich in der Praxis der unter der Typenbezeichnung TDA 1462 im Handel befindliche integrierte Baustein der Anmelderin als zweckmässig erwiesen. Die Schaltstufeneinrichtung 59 ist bei dem System gemäss Fig. 3 durch den unter der Typenbezeichnung HEF 4052 im Handel befindliche integrierte Baustein der Anmelderin realisiert. Die Eingabeschaltung 10 ist in der Praxis beispielsweise mit einem Mikroprozessor der Type 8050 von der Firma INTEL realisiert.

Im folgenden wird anhand des in Fig. 4 dargestellten Flussdiagramms die Realisierung eines digitalen Sägezahnsignalgenerators 67 mit Hilfe eines wie in Fig. 3 dargestellten Mikroprozessors vom Typ INTEL 8051 beschrieben, wobei zur einfacheren Beschreibung die in den Diagrammen gemäss den Figuren 5a, 5b und 5c dargestellten Signalverläufe dienen. Das Diagramm gemäss Fig. 5a zeigt den Verlauf des vom Impulsgenerator 39 an dessen Ausgang 53 abgegebenen Impulssignales H, worin die Abtastperioden P der Magnetköpfe K1 und K2 eingetragen sind. Im Diagramm gemäss Fig. 5b sind die vom Impulsgenerator 39 an dessen Ausgang 47 abgegebenen Taktimpulse T schematisch durch die steigende Impulsflanke derselben dargestellt. Das Diagramm gemäss Fig. 5c zeigt das erzeugte sägezahnförmige Steuersignal V, dessen Verlauf durch eine von den Taktimpulsen festgelegte Anzahl von digitalen Signalwerten V(i) bestimmt ist.

Beim Block 73 erfolgt der Start des Programmablaufes. Beim Block 74 wird ein Register R0, das zum Zählen der Taktimpulse T vorgesehen ist, mit dem Wert 1 geladen. Beim Block 75 wird ein Register R1, das zum Speichern eines digitalen Signalwertes V(i) vorgesehen ist, mit einem Sägezahnsignal-Anfangswert V(0) geladen, der im hier beispielsweise angenommenen Fall den Wert Null aufweist. Selbstverständlich kann der Sägezahnsignal-Anfangswert V(0) auch einen von Null verschiedenen Wert aufweisen. Beispielsweise kann als Anfangswert V(0) in das Register R1 auch ein Sprungsignalwert eingeschrieben werden, der so gewählt ist, dass durch denselben der betreffende Magnetkopf vor dem Beginn eines Abtastvorganges sprungartig auf eine andere abzutastende Spur versetzt wird. Beim Block 76 wird ein zum Speichern eines eingeschriebenen Wertes vorgesehenes Register R2 mit einem Differenzsignalwert DS(n) geladen. Bei diesem Differenzsignalwert DS(n) handelt es sich um ein Bit-Wort, das der Differenz zwischen zwei digitalen Signalwerten V(i) und V(i+1), die den Verlauf des zu erzeugenden sägezahnförmigen Steuersignals V festlegen, entspricht. Dies bedeutet, dass durch die Grösse des Differenzsignalwertes DS(n) der Verlauf des erzeugten sägezahnförmigen Steuersignales festgelegt wird. Beim Block 77 wird zum Inhalt des Registers R1 der Inhalt des Registers R2 hinzuaddiert und die Summe wieder in das Register R1 eingeschrieben. Es wird hierbei also der digitale Signalwert V(1) = V(0) + DS(n) gebildet. Danach wird beim Block 78 geprüft, ob im Impulssignal H eine Flanke, egal ob steigend oder fallend, auftritt. Ist dies nicht der Fall, dann wird das Eintreffen einer solchen Flanke durch ständiges Prüfen abgewartet, wodurch die erforderliche zeitliche Relation zwischen dem Impulssignal H und damit den Abtastperioden P der Magnetköpfe K1 und K2 und andererseits dem sägezahnförmigen Steuersignal V erreicht wird. Tritt eine Flanke im Impulssignal H auf, dann wird gemäss dem nächsten Programmschritt beim Block 79 geprüft, ob eine steigende Flanke eines Taktimpulses T auftritt. Ist dies nicht der Fall, dann wird das Eintreffen einer solchen Flanke durch ständiges Prüfen abgewartet. Tritt eine solche Flanke auf, dann wird gemäss dem nächsten Programmschritt beim Block 80 der Inhalt des Registers R0 inkrementiert, also der Inhalt um den Wert 1 erhöht. Danach wird beim Block 81 geprüft, ob der Inhalt des Registers R0 dem Wert 16 entspricht. Dies deshalb, weil wie erwähnt in einer Halbperiode des Impulssignales H sechzehn Taktimpulse T liegen. Solange der Inhalt des Registers R0 kleiner als der Wert 16 ist, wird gemäss dem nächsten Programmschritt beim Block 82 zum Inhalt des Registers R1 der Inhalt des Registers R2 hinzuaddiert und die Summe wieder in das Register R1 eingeschrieben. Es wird hierbei der digitale Signalwert V(2) = V(1) + DS(n) gebildet. Beim nachfolgenden Block 83 wird der Inhalt des Registers R1, also der digitale Signalwert V(2), als erster digitaler Signalwert des Sägezahnsignalgenerators nach dem Auftreten einer Flanke im Impulssignal H ausgegeben, wie dies aus Fig. 5 ersichtlich ist. Auf diese Weise ist einfach erreicht, dass die Ausgabe des gesamten sägezahnförmigen Steuersignales V gegenüber den Abtastperioden P der Magnetköpfe voreilend erfolgt, was wie erwähnt zum Ausgleich von nachfolgenden Laufzeitverzögerungen erforderlich ist. Nach der beim Block 83 erfolgten Ausgabe des digitalen Signalwertes V(2) wird beim Block 84 geprüft, ob der Inhalt des Registers R0 dem Wert 1 entspricht. Wenn dies nicht der Fall ist, wird der Programmablauf über die Blöcke 79, 80, 81, 82, 83 und 84 zyklisch fortgesetzt, wobei dann nacheinander die digitalen Signalwerte V(3), V(4) bis V(16) beim Block 83 ausgegeben werden, welche in Fig. 5 mit Pfeilen angedeutet sind. Nach der Ausgabe des sechzehnten digitalen Signalwertes V(16) beim Block 83 werden wieder die Blöcke 84, 79 und 80 durchlaufen. Danach wird beim Block 81 festgestellt, dass der Inhalt des Registers R0 dem Wert 16 entspricht, worauf der Programmablauf beim Block 85 fortgesetzt wird. Beim Block 85 wird das Register R0 auf den Wert Null gesetzt und danach wird beim Block 86 das Register R1 mit dem Sägezahnsignal-Anfangswert V(0) geladen. Hierauf erfolgt beim Block 83 die Ausgabe des Inhaltes des Registers R1, also die Ausgabe des digitalen Anfangswertes V(0). Nachfolgend wird beim Block 84 festgestellt, dass der Inhalt des Registers R0 nicht den Wert 1 aufweist, weil dieses Register eben zuvor beim Block 85 mit dem Wert Null geladen wurde, so dass der Programmablauf über die Blöcke 79, 80, 81, 82 und 83 fortgesetzt wird, wobei beim Block 83 die Ausgabe des Inhaltes des Registers R1, also des digitalen Signalwertes V(1), erfolgt. Nachfolgend wird nunmehr aufgrund der zuvor beim Block 80 erfolgten Inkrementierung des Registers R0 beim Block 84 festgestellt, dass der Inhalt des Registers R0 den Wert 1 aufweist, so dass dann der Programmablauf beim Block 78 fortgesetzt wird, bei dem aus Synchronisationsgründen die nächstfolgende Flanke im Impulssignal H abgewartet wird. Nach dem Eintreffen dieser Flanke erfolgt wiederum der bereits beschriebene Programmablauf, wobei dann wieder die digitalen Signalwerte V(2), V(3) ... V(16), V(0) und V(1) erzeugt werden. Diese digitalen Signalwerte V(i) sind durch einen Digital/Analog-Umsetzer und ein nachgeschaltetes Filter in ein analoges sägezahnförmiges Steuersignal V, wie dies in Fig. 5c dargestellt ist, umwandelbar.

Wie erwähnt, ist der Verlauf des sägezahnförmigen Steuersignales V durch die Grösse des in das Register R2 eingeschriebenen Differenzsignalwertes DS(n) festgelegt. Es ist daher vollkommen klar, dass durch Einschreiben von unterschiedlich grossen Differenzsignalwerten DS(n) in das Register R2 Steuersignale mit unterschiedlichen Signalverläufen erhalten werden, so dass auf diese Weise besonders einfach ein hinsichtlich des Signalverlaufes umschaltbarer Sägezahnsignalgenerator realisiert ist.

Anhand des Flussdiagrammes gemäss Fig. 6 wird die Realisierung eines digitalen Impulsgenerators 39 mit Hilfe eines wie in Fig. 3 dargestellten Mikroprozessors vom Typ INTEL 8051 beschrieben. Dabei ist als Beispiel die Erzeugung des Impulssignales $H_R$, das der Kopfantriebs-Servoschaltung 35 als Soll-Signal zugeführt wird, angeführt. Der Mikroprozessor INTEL 8051 bietet die Möglichkeit, ein sogenanntes internes Timer-Interrupt-Programm abzuarbeiten. Hierfür ist ein Timer-Register RT1 vorgesehen, welches mit einem Timervorgabewert TV(n) geladen werden kann. Der Timervorgabewert ist dabei durch eine mit einem negativen Vorzeichen versehene, als Bit-Kombination in das Timer-Register RT1 einschreibbare Zahl gebildet. Nach dem Laden des Timer-Registers RT1 mit dem Timervorgabewert TV(n) wird das Timer-Register automatisch nach je einer Mikrosekunde inkrementiert, also der Inhalt des Timer-Registers RT1 um den Wert 1 erhöht. Wenn der Inhalt des Timer-Registers den Wert Null erreicht, dann wird der momentan im Mikroprozessor abgearbeitete Programmablauf automatisch unterbrochen und es wird das interne Timer-Interrupt-Programm gestartet. Mit diesem internen Timer-Interrupt-Programm ist eine besonders einfache Realisierung eines Impulsgenerators ermöglicht.

Beim Block 87 erfolgt der Start des internen Timer-Interrupt-Programmes. Beim Block 88 wird das Timer-Register RT1 mit dem Inhalt eines Registers R3 geladen, das zum Speichern des vorerwähnten Timervorgabewertes TV(n) dient. Auf diese Weise ist erreicht, dass ein gewünschter Timervorgabewert TV(n) zu jedem beliebigen Zeitpunkt in das Register R3 eingeschrieben werden kann und erst dann, wenn derselbe benötigt wird, in das Timer-Register RT1 übernommen wird. Beim Block 89 wird der Ausgang des Mikroprozessors, an dem derselbe das Impulssignal $H_R$ abgibt, in seinem Pegel invertiert, dies bedeutet, dass entweder von einem hohen Pegel auf einen niedrigen Pegel oder umgekehrt von einem niedrigen Pegel auf einen hohen Pegel umgeschaltet wird, wodurch eine Impulsflanke des Impulssignales $H_R$ abgegeben wird. Beim Block 90 erfolgt die Rückkehr zu dem durch den beim Block 87 erfolgten Start des internen Timer-Interrupt-Programmes unterbrochenen Programmablauf. Während dieses Programmablaufes wird nun das beim Block 88 mit dem Timervorgabewert TV(n) geladene Timer-Register RT1 automatisch jede Mikrosekunde inkrementiert, bis der Inhalt desselben wieder den Wert Null erreicht, was automatisch den Start des Timer-Interrupt-Programmes beim Block 87 zur Folge hat, wobei dann die nächste Impulsflanke des Impulssignales $H_R$ beim Block 89 abgegeben wird.

Der zeitliche Abstand zwischen zwei auf diese Weise erzeugten aufeinanderfolgenden Impulsflanken, welcher der halben Periodendauer des Impulssignales $H_R$ entspricht, ist auf diese Weise durch den Timervorgabewert TV(n) festgelegt. Je grösser ein Timervorgabewert TV(n) ist, um so länger dauert das Inkrementieren des Timer-Registers RT1 und um so grösser ist der zeitliche Abstand zwischen den Impulsflanken und damit die Periodendauer des erzeugten Impulssignales. Es ist daher klar, dass durch Einschreiben von unterschiedlich grossen Timervorgabewerten TV(n) in das Register R3, aus dem dieselben dann in das Timer-Register RT1 übernommen werden, Impulssignale mit unterschiedlichen Periodendauern erhalten werden, so dass auf diese Weise besonders einfach ein hinsichtlich der Periodendauer umschaltbarer Impulsgenerator realisiert ist. In einem wie vorstehend anhand der Figuren 1 bis 3 beschriebenen System zum Wiedergeben von Farbfernsehsignalen von einem Magnetband bei verschiedenen Betriebsarten mit unterschiedlichen vorgegebenen Fortbewegungsgeschwindigkeiten des Magnetbandes ist selbstverständlich auch ein Betriebsartenwechsel durchführbar, wobei von einer Wiedergabe bei einer Fortbewegungsgeschwindigkeit auf eine Wiedergabe bei einer anderen Fortbewegungsgeschwindigkeit umgeschaltet wird. Um die bei den bekannten Systemen bei einem solchen Betriebsartenwechsel auftretenden Störungen in den wiedergegebenen Bildsignalen, die in einem abrupten Umschaltvorgang von einer Betriebsart auf eine andere Betriebsart ihre Ursache haben, zu vermeiden, wird beim vorliegenden erfindungsgemässen System gemäss den Figuren 1 bis 3 der Umschaltvorgang zwischen zwei Betriebsarten in nahezu beliebig kleine Umschaltintervalle unterteilt.

Hierfür ist vorgesehen, dass die Schalteinrichtung 12 einen in Fig. 1 symbolisch mit strichlierten Linien dargestellten Schrittschaltsignalgenerator 91 aufweist. Dieser Schrittschaltsignalgenerator ist durch Betätigen eines der Betriebsartenschalter 4, 5, 6, 7, 8, 9 bzw. 10 der Betriebsarten-Wähleinrichtung 3 in Betrieb setzbar und dient zum Erzeugen von bei einem Betriebsartenwechsel in automatisch und kontinuierlich aufeinanderfolgenden Schritten abgegebenen, bei jedem Schritt sich im Wert ändernden Schaltsignalen TW(n), DS(n) und TV(n). Mit diesen Schaltsignalen, die für jeden Schritt des Schrittschaltsignalgenerators in vorgegebener Weise aufeinander abgestimmt sind, schaltet der Schrittschaltsignalgenerator 91 die Bandantriebseinrichtung 13 hinsichtlich der Fortbewegungsgeschwindigkeit des Magnetbandes 2, den Sägezahnsignalgenerator 67 hinsichtlich des Signalverlaufes des sägezahnförmigen Steuersignales und die Kopfantriebseinrichtung 32 hinsichtlich der Drehzahl der Magnetköpfe K1 und K2 schrittweise in durch den Wert der Schaltsignale festgelegten, aneinander angepassten Stufen korrespondierend zueinander um. Hierdurch ist der Umschaltvorgang bei einem Betriebsartenwechsel in durch die Schrittfolge der Schaltsignale des Schrittschaltsignalgenerators 91 festgelegte Umschaltintervalle unterteilt. Durch diese Unterteilung des Umschaltvorganges ist erreicht, dass die Bandantriebseinrichtung, der Sägezahnsignalgenerator des Spurfolgeservosystems und die Kopfantriebseinrichtung in so vielen, nahezu beliebig kleinen, durch den Wert der Schaltsignale festgelegten Stufen korrespondierend zueinander umgeschaltet werden, dass sich die unterschiedlichen dynamischen Eigenschaf- ten der Bandantriebseinrichtung, der Spurfolge- servosystems und der Kopfantriebseinrichtung nicht auswirken, so dass nicht nur bei jeder mit der Betriebsarten-Wähleinrichtung einschaltbaren Betriebsart, sondern auch bei einem Betriebsartenwechsel stets ein genau aufeinander abge- stimmtes, zueinander synchrones Betriebsverhal- ten dieser drei elektromechanischen Systeme gewährleistet ist. Hierdurch ist aber erreicht, dass auch bei einem Betriebsartenwechsel stets eine einwandfreie und ungestörte Wiedergabe der aufgezeichneten Farbfernsehsignale erfolgt.

Im folgenden wird ein erstes Ausführungsbeispiel eines Schrittschaltsignalgenerators 91 beschrieben. Wie bereits aus Fig. 1 zu entnehmen ist, ist der Schrittschaltsignalgenerator mit der programmierbaren Datenverarbeitungseinheit, nämlich dem Mikroprozessor 71, realisiert. Dabei hat es sich als vorteilhaft erwiesen, wenn die Werte aller Schaltsignale TW(n), DS(n) und TV(n) für alle Schritte des Schrittschaltsignalgenerators 91 in Tabellenform im Mikroprozessor gespeichert sind. Eine solche Tabelle ist schematisch in Fig. 7 dargestellt. Den Schaltsignalen TW(n), DS(n) und TV(n) jeden Schrittes ist dabei eine sogenannte Schrittzahl Z(n) zugeordnet, um ein einfaches Auffinden der Schaltsignale jeden Schrittes zu erreichen. In der Tabelle sind je durch strichlierte Linien getrennt für die Schrittzahl Z(n) und die Schaltsignale, nämlich die Teilerworte TW(n), die Differenzsignalwerte DS(n) und die Timervorgabewerte TV(n), in der Praxis zur Anwendung gelangende Zahlenwerte in dekadischer Form angegeben. Bezüglich der Differenzsignalwerte DS(n) ist hierbei zu bemerken, dass die in der Tabelle angegebenen Zahlenwerte in der Praxis dem achtfachen Wert der Differenz zwischen zwei digitalen Signalwerten V(i) und V(i + 1) des sägezahnförmigen Steuersignales entsprechen, um ganzzahlige Differenzsignalwerte DS(n) zu erreichen, so dass dem Sägezahnsignalgenerator 67 gemäss Fig. 4 nur jeweils der durch den Wert 8 geteilte Differenzsignalwert DS(n) zur Bildung der digitalen Signalwerte V(i) zugeführt wird. Zusätzlich sind in der Tabelle gemäss Fig. 7 noch die Fortbewegungsgeschwindigkeiten v(n) des Magnetbandes 2 angegeben, die bei den mit der Betriebsarten-Wähleinrichtung 3 einschaltbaren Betriebsarten vorliegen.

Wie aus den Schrittzahlen Z(n), die von Z(0) bis Z(119) steigen, zu entnehmen ist, ist bei vorliegendem System ein Betriebsartenwechsel von einer Betriebsart mit siebenfacher Fortbewe- gungsgeschwindigkeit in der gleichen Fortbewe- gungsrichtung wie bei der normalen Wiedergabe zu einer Betriebsart mit fünffacher Fortbewegungsgeschwindigkeit in der entgegengesetzten Fortbewegungsrichtung wie bei der normalen Wiedergabe in 120 Schritte unterteilt, was sich in der Praxis als sehr günstig erwiesen hat. Selbstverständlich kann aber auch eine andere Schrittanzahl gewählt werden, etwa eine noch höhere, um eine noch feinere Abstufung des Umschaltvorganges zu erzielen.

Anhand des in Fig. 8 dargestellten Flussdiagrammes wird nun die Realisierung eines digitalen Schrittschaltsignalgenerators 91 mit Hilfe eines wie in Fig. 3 dargestellten Mikroprozessors vom Typ Intel 8051 beschrieben. Beim Block 92 erfolgt der Start des Programmablaufes. Beim Block 93 wird in ein Register R4, das zum Speichern der Schrittzahl Z(n) jenes Schrittes des Schrittschaltsignalgenerators dient, mit dessen Schaltsignalen die im System entsprechend eines betätigten Betriebsartenschalters neu einzuschaltende Betriebsart einschaltbar ist, im vorliegenden Fall also Z(0), Z(38), Z(60), Z(65), Z(70), Z(78) bzw. Z(119), mit der Schrittzahl Z(60) geladen, welche Schrittzahl der normalen Wiedergabe- Betriebsart entspricht. Beim Block 94 wird danach ein Register R5, das zum Speichern der Schrittzahl Z(n) jenes Schrittes dient, mit dessen Schaltsignal das jeweils nächste Umschaltintervall auslösbar ist, mit der Schrittzahl Z(61) geladen. Danach wird beim Block 95 geprüft, ob im Impulssignal H eine steigende Flanke auftritt, bei deren Auftreten wie erwähnt der Magnetkopf K1 die Abtastung einer Spur beginnt. Ist dies nicht der Fall, dann wird das Eintreffen einer solchen steigenden Flanke abgewartet, wodurch eine zeitliche Relation zwischen den steigenden Flanken des Impulssignales H und damit den Abtastperioden P des Magnetkopfes K1 und den Schritten des Schrittschaltsignalgenerators erreicht ist, was sich in der Praxis als zweckmässig erwiesen hat. Selbstverständlich könnte durch Prüfen des Impulssignales H auf dessen fallende Flanke auch eine zeitliche Relation zwischen den Schritten des Schrittschaltsignalgenerators und den Abtastperioden P des Magnetkopfes K2 erreicht werden. Wenn eine steigende Flanke im Impulssignal H beim Block 95 festgestellt wird, dann wird beim Block 96 geprüft, ob einer der Betriebsartenschalter 4, 5, 6, 7, 8, 9 und 10 der Betriebsarten- Wähleinrichtung 3 betätigt wurde.

Wenn kein Betriebsartenschalter betätigt wurde, dann wird beim Block 97 geprüft, ob der Inhalt des Registers R5 gleich dem Inhalt des Registers R4 ist. Weil das Register R4 beim Block 93 mit der Schrittzahl Z(60) und das Register R5 beim Block 94 mit der Schrittzahl Z(61) geladen wurde, fällt die Prüfung beim Block 97 negativ aus. Daher wird nun beim Block 98 geprüft, ob der Inhalt des Registers R5 grösser ist als der Inhalt des Registers R4, was der Fall ist, da die Schrittzahl Z(61) grösser als die Schrittzahl Z(60) ist. Hierauf wird beim Block 99 der Inhalt des Registers R5 dekrementiert, also der Inhalt des Registers R5 um den Wert 1 vermindert. Danach erfolgt beim Block 100 die Ausgabe des Schaltsignales TW(n) zu der im Register R5 enthaltenen Schrittzahl Z(n), welches dem Frequenzteiler 22 der Bandantriebseinrichtung 13 zugeführt wird.

Dies hat zur Folge, dass die Bandantriebseinrichtung auf die durch das Schaltsignal TW(n) festgelegte Fortbewegungsgeschwindigkeit umgeschaltet wird. Die Schrittzahl Z(n) ist in diesem Fall nach der Dekrementierung beim Block 99 durch die Schrittzahl Z(60) gebildet, so dass beim Block 100 das Teilerwort TW(60) als Schaltsignal abgegeben wird, was die Umschaltung der Bandantriebseinrichtung auf die Normalgeschwindigkeit bewirkt. Nach der Abgabe des Schaltsignales TW(n) beim Block 100 wird mit der Weiterführung des Programmablaufes beim Block 101 eine vorgegebene Zeitspanne T1 abgewartet. Diese Zeitspanne ist im wesentlichen so lange gewählt, als die Bandantriebseinrichtung 13 benötigt, um das Magnetband mit der durch das beim Block 100 abgegebene Schaltsignal bestimmten Fortbewegungsgeschwindigkeit tatsächlich anzutreiben. Danach erfolgt beim Block 102 die Ausgabe des Schaltsignales DS(n) zu der im Register R5 enthaltenen Schrittzahl Z(n), welches Schaltsignal DS(n) in das Register R2 des anhand der Figur 4 beschriebenen, hinsichtlich des Signalverlaufes umschaltbaren Sägezahnsignalgenerators eingeschrieben wird und hierdurch den an die vom Schaltsignal TW(n) festgelegte Fortbewegungsgeschwindigkeit angepassten Verlauf des sägezahnförmigen Steuersignales festlegt. Die Abgabe des Schaltsignales DS(n) erfolgt zweckmässigerweise im wesentlichen zu einem auch durch die vorerwähnte Zeitspanne T1 festlegbaren Zeitpunkt, zu dem der Sägezahnsignalgenerator gemäss Fig. 4 die Rücksprungflanke des sägezahnförmigen Steuersignales erzeugt. Auf diese Weise ist erreicht, dass die Umschaltung des Signalverlaufes des sägezahnförmigen Steuersignales nicht während der Erzeugung des ansteigenden Teiles dieses Steuersignales erfolgt. In diesem Fall wird als Schaltsignal DS(n) der Differenzsignalwert DS(60) abgegeben, der entsprechend der normalen Wiedergabe-Betriebsart Null ist, so dass in diesem Fall kein sägezahnförmiges Steuersignal gebildet wird. Danach erfolgt beim Block 103 die Ausgabe des Schaltsignales TV(n) zu der im Register R5 enthaltenen Schrittzahl Z(n), welches Schaltsignal TV(n) in das Register R3 eingeschrieben wird, aus dem das Schaltsignal TV(n) bei Bedarf in das Timer-Register RT1 des anhand der Fig. 6 beschriebenen, hinsichtlich der Periodendauer umschaltbaren Impulsgenerators übernommen wird. Der Zeitpunkt der Abgabe des Schaltsignales TV(n) an das Register R3 ist unkritisch, da die Übernahme des Schaltsignales TV(n) in das Timer-Register RT1 durch das Timer-Interrupt-Programm selbst synchronisiert ist. Mit dem Schaltsignal TV(n) wird der Impulsgenerator in seiner Periode so umgeschaltet, dass das von demselben an die Kopfantriebseinrichtung als Soll-Signal abgegebene Impulssignal $H_R$ eine an die Fortbewegungsgeschwindigkeit des Magnetbandes und an den Verlauf des sägezahnförmigen Steuersignales angepasste Drehzahl der Magnetköpfe K1 und K2 festlegt. In diesem Fall wird als Schaltsignal TV(n) der Timervorgabewert TV(60) abgegeben, der ein Impulssignal $H_R$ mit genau 40 ms Periodendauer und eine Drehzahl der Magnetköpfe von genau 25 Hz zur Folge hat. Auf diese Weise ist für den Fall, dass beim Block 96 festgestellt wurde, dass kein Betriebsartenschalter betätigt wurde, durch Abgabe der Schaltsignale TW(60), DS(60) und TV(60) bei den Blöcken 100, 102 und 103 dafür gesorgt, dass die Bandantriebseinrichtung, der Sägezahnsignalgenerator und die Kopfantriebseinrichtung auf die für eine normale Wiedergabe-Betriebsart erforderlichen Betriebswerte geschaltet werden, dass also automatisch die normale Wiedergabe-Betriebsart eingeschaltet wird, wenn keine andere Betriebsart mittels der Betriebsarten-Wähleinrichtung gewählt wurde. Nach der Abgabe der Schaltsignale TW(60), DS(60) und TV(60) wird der Programmablauf beim Block 95 fortgesetzt, wobei nach dem neuerlichen Auftreten einer steigenden Flanke im Impulssignal H, was beim Block 95 geprüft wird, beim Block 96 neuerlich geprüft wird, ob ein Betriebsartenschalter betätigt wurde. Wenn dies wieder nicht der Fall ist, ergibt die nächste Prüfung beim Block 97, dass der Inhalt des Registers R5 gleich dem Inhalt des Registers R4 ist, da in beiden Registern nunmehr die Schrittzahl Z(60) enthalten ist, und es wird der Programmablauf wiederum beim Block 96 fortgesetzt. Diese Programmschleife wird so lange durchlaufen, als kein Betriebsartenschalter betätigt wird.

Wenn aber nunmehr zur Durchführung eines Betriebsartenwechsels ein Betriebsartenschalter betätigt wird, wobei als Beispiel die Betätigung des Betriebsartenschalters 10 zum Einschalten der Wiedergabe-Betriebsart mit fünffacher Fortbewegungsgeschwindigkeit des Magnetbandes in entgegengesetzter Richtung als bei der normalen Wiedergabe angenommen sei, dann endet die Prüfung beim Block 96 positiv. Darauf wird beim Block 104 das Register R4 mit der Schrittzahl Z(n) geladen, die der durch die Betätigung des Betriebsartenschalters einzuschaltenden Betriebsart entspricht, also beim angenommenen Beispiel mit der Schrittzahl Z(119). Danach wird der Programmablauf beim Block 97 fortgesetzt, wobei die Prüfung auf Gleichheit der Inhalte der Register R4 und R5 negativ ausfällt. Die anschliessende Prüfung beim Block 98 ergibt, dass der Inhalt des Registers R5 kleiner ist als der Inhalt des Registers R4, da im Register R5 die Schrittzahl Z(60) und im Register R4 die Schrittzahl Z(119) enthalten ist. Daher wird der Programmablauf beim Block 105 fortgesetzt, bei dem der Inhalt des Registers R5 inkrementiert wird. Es sei noch erwähnt, dass durch Betätigen der Tasten 4 oder 5 eine gegenüber der Schrittzahl Z(60) kleinere Schrittzahl, nämlich Z(0) oder Z(38), in das Register R4 eingeschrieben wird, wobei dann nach der Prüfung beim Block 98 der programmablauf beim Block 99 fortgesetzt wird, wobei wie erwähnt ein Dekrementieren des Inhaltes des Registers R5 erfolgt. Nach dem Dekrementieren bzw. Inkrementieren des Registers R5 bei den Blöcken 99 bzw. 105 erfolgt bei den Blöcken 100, 102 und 103 die Ausgabe der Schaltsignale TW(n), DS(n) und TV(n) zu der im Register R5 enthaltenen Schrittzahl Z(n), im angenommen Beispiel die Schaltsignale TW(61) DS(61) und TV(61) zur Schrittzahl Z(61), wodurch die Bandantriebseinrichtung, der Sägezahnsignalgenerator des Spurfolgeservosystems und die Kopfantriebseinrichtung in einer ersten durch den Wert der soeben abgegebenen Schaltsignale festgelegten kleinen Stufe korrespondierend zueinander umgeschaltet werden. Nach der Abgabe der Schaltsignale wird der Programmablauf beim Block 95 fortgesetzt, wobei die nächste steigende Flanke im Impulssignal H abgewartet wird. Nach Eintreffen dieser Flanke wird der Programmablauf über die Blöcke 96, 97, 98, 105, 100, 101, 102 und 103 fortgesetzt, wobei die Schaltsignale gemäss dem nächsten Schritt mit der Schrittzahl Z(62) abgegeben werden. Mit jedem Eintreffen einer steigenden Flanke im Impulssignal H wird der Programmablauf über die Blöcke 96, 97, 98, 105, 100, 101, 102 und 103 in automatisch und kontinuierlich aufeinanderfolgender Weise durchlaufen, wobei die Schaltsignale gemäss den nächsten Schrittenmit den Schrittzahlen Z(63), Z(64), . . . usw. abgegeben werden. Mit den Schaltsignalen jedes Schrittes werden die Bandantriebseinrichtung, der Sägezahnsignalgenerator und die Kopfantriebseinrichtung in durch den Wert der Schaltsignale festgelegten kleinen Stufen korrespondierend zueinander umgeschaltet. An dieser Stelle sei noch erwähnt, dass bei der Ausgabe der Schaltsignale zu der Schrittzahl Z(70) zusätzlich auch das Schaltsignal SC an die Bandantriebs-Servoschaltung 17 und bei der Ausgabe der Schaltsignale zu den Schrittzahlen Z(71) bis Z(119) zusätzlich auch das Schaltsignal RC an die Bandantriebs-Servoschaltung 17 von der digitalen Schalteinrichtung 12 abgegeben wird, wie dies bereits anhand von Figur 1 beschrieben wurde.

Sobald die Abgabe der Schaltsignale, mit welchen die dem betätigten Betriebsartenschalter entsprechende Betriebsart eingeschaltet wird, erfolgte, im angeommenen Beispiel die Schaltsignale TW(119), DS(119) und TV(119) zur Schrittzahl Z(119), ergibt beim nachfolgenden Block 95 beginnenden Programmablauf die Prüfung beim Block 97, dass der Inhalt des Registers R5 und der Inhalt des Registers R4 übereinstimmen, wobei dann der weitere Programmablauf beim Block 96 fortgesetzt wird, bei dem eine Betätigung eines anderen Betriebsartenschalters abgewartet wird, so dass dann auch keine weiteren Schaltsignale mehr abgegeben werden.

Wie ersichtlich, ist auf vorstehend beschriebene Weise sehr einfach ein Schrittschaltsignalgenerator realisiert, der in automatisch und kontinuierlich aufeinanderfolgenden Schritten eine Vielzahl von Schaltsignalen abgibt, wobei sich die Schaltsignale in ihren Werten von Schritt zu Schritt in aufeinander abgestimmter Weise ändern. Der Schrittschaltsignalgenerator weist trotz der Vielzahl der von ihm abgegebenen Schaltsignale einen sehr einfachen Aufbau auf. Der Schrittschaltsignalgenerator gibt dabei die Schaltsignale in aufeinanderfolgenden Schritten mit gleichem zeitlichem Abstand ab, welcher durch die steigenden Flanken des Impulssignales H festgelegt ist.

In Fig. 9 ist ein Flussdiagramm zur Realisierung eines digitalen Schrittschaltsignalgenerators 91 mit Hilfe eines Mikroprozessors dargestellt, der die Schaltsignale in aufeinanderfolgenden Schritten mit zur Grösse der durch den Wert der Schaltsignale festgelegten, aneinander angepassten Stufen proportionalen zeitlichen Abständen abgibt. Beim Programmablauf gemäss Fig. 9 wird nach dem Block 97 bei einem Block 106 das Schaltsignal DS(n) zu der im Register R5 enthaltenen Schrittzahl Z(n) in ein Register R6 eingeschrieben, das zum Speichern des bei einem vorangegangenen Schritt gemäss der Schrittzahl Z(n) abgegebenen Schaltsignales DS(n) dient. Danach wird der Programmablauf bei den Blöcken 98 und 99 bzw. 105 fortgesetzt, wobei ein Dekrementieren bzw. Inkrementieren des Inhaltes des Registers R5 erfolgt. Danach wird beim Block 107 das Schaltsignal DS(n) zu der im Register R5 enthaltenen, durch vorherige Dekrementierung bzw. Inkrementierung des Registerinhaltes erhaltenen Schrittzahl Z(n) in ein Register R7 eingeschrieben, das zum Speichern des beim nunmehrigen Schritt gemäss der durch vorherige Dekrementation bzw. Inkrementation erhaltenen Schrittzahl Z(n) abgegebenen Schaltsignales DS(n) dient. Danach erfolgt bei den Blöcken 100, 102 und 103 die Abgabe der Schaltsignale TW(n), DS(n) und TV(n) zu der im Register R5 enthaltenen Schrittzahl Z(n). Danach wird beim Block 108 der Absolutwert der Differenz zwischen dem Inhalt des Registers R7 und dem Inhalt des Registers R6 gebildet, es wird also der Absolutwert der Differenz zwischen den bei aufeinanderfolgenden Schritten des Schrittschaltsignalgenerators abgegebenen Differenzsignalwerten DS(n) gebildet. Der Absolutwert der Differenz bildet ein Mass für die Grösse der Stufen, gemäss welchen das Umschalten der Bandantriebseinrichtung, des Sägezahnsignalgenerators des Spurfolgeservosystems und der Kopfantriebseinrichtung erfolgt. Beim Block 109 wird der Inhalt des Registers R8 dekrementiert. Beim Block 110 wird geprüft, ob der Inhalt des Registers R8 gleich Null ist. Wenn dies nicht der Fall ist, dann wird beim Block 111 geprüft, ob eine steigende Flanke im Impulssignal H auftritt. Tritt keine solche steigende Flanke auf, dann wird das Auftreten derselben ständig neu überprüft und somit das Eintreffen einer solchen Flanke abgewartet. Tritt eine solche steigende Flanke im Impulssignal H auf, dann wird der Programmablauf beim Block 109 fortgesetzt, wobei der Inhalt des Registers R8 weiter dekrementiert wird. In Abhängigkeit vom ursprünglichen Inhalt des Registers R8, der durch den Absolutwert der Differenz zwischen zwei bei aufeinanderfolgenden Schritten abgegebenen Schaltsignalen DS(n) gebildet ist, wird diese Programmschleife mehrmals durchlaufen, so dass der zeitliche Abstand zwischen zwei Schritten des Schrittschaltsignalgenerators zu der Grösse der erwähnten Umschaltstufen proportional ist. Erst wenn bei der Prüfung beim Block 110 festgestellt wird, dass der Inhalt des Registers R8 gleich Null ist, dann wird der Programmablauf zur Durchführung des nächsten Schrittes des Schrittschaltsignalgenerators beim Block 95 fortgesetzt.

Im folgenden wird anhand des in Fig. 10 dargestellten Flussdiagrammes die Realisierung einer digitalen Detektionseinrichtung 112 zum Detektieren der Fortbewegungsgeschwindigkeiten des Magnetbandes mit Hilfe eines wie in Fig. 3 dargestellten Mikroprozessors 71 vom Typ Intel 8051 beschrieben. Zum Detektieren der Fortbewegungsgeschwindigkeiten des Magnetbandes wird das mit Hilfe des Tachogenerators 19, 18 der Bandantriebseinrichtung 13 erzeugte, von der Impulsverarbeitungsschaltung 20 abgegebene, das Ist-Signal bildende Impulssignal über eine mit strichpunktierten Linien in Fig. 1 angedeutete Leitung dem sogenannten Interrupt-Eingang des Mikroprozessors 71 zugeführt. Jede steigende Flanke des diesem Interrupt-Eingang zugeführten Ist-Signals löst ein Interrupt-Programm aus, dessen Start beim Block 113 erfolgt. Beim Block 114 wird ein Register R9 mit dem Inhalt eines im Mikroprozessor enthaltenen weiteren Timer-Registers RT2 geladen, dessen Inhalt automatisch jede Mikrosekunde inkrementiert wird. Beim Block 115 wird der Inhalt des Timer-Registers RT2 auf den Wert Null gesetzt. Danach erfolgt beim Block 116 die Rückkehr zu dem durch den Start des Interrupt-Programmes unterbrochenen Programmablauf. Während dieses programmablaufes wird das Timer-Register RT2 automatisch jede Mikrosekunde vom Wert Null beginnend inkrementiert. Sobald die nächste steigende Flanke im Ist-Signal auftritt, wird der Inhalt des Timer-Registers RT2, der dem zeitlichen Abstand zwischen zwei steigenden Impulsflanken des Ist-Signales entspricht, in das Register R9 übertragen. Der zeitliche Abstand zwischen zwei steigenden Impulsflanken des Ist-Signales stellt aber ein Mass für die momentane Fortbewegungsgeschwindigkeit des Magnetbandes dar, so dass im Register R9 der Detektionseinrichtung 112 stets ein der momentanen Fortbewegungsgeschwindigkeit des Magnetbandes entsprechendes digitales Detektionssignal gespeichert ist.

Die Fig. 11 zeigt ein Flussdiagramm zur Realisierung eines digitalen Schrittschaltsignalgenerators 91, der mit einer digitalen Vergleichseinrichtung zusammenwirkt, welche die zeitlichen Abstände der aufeinanderfolgenden Schritte des Schrittschaltsignalgenerators festlegt. Der Vergleichseinrichtung, die ebenfalls mit dem Mikroprozessor 71 realisiert ist, werden einerseits die von der digitalen Detektionseinrichtung 112, wie sie anhand des Flussdiagrammes gemäss Fig. 10 beschrieben ist, abgegebenen Detektionssignale, die im Register R9 gespeichert sind, und andererseits Referenzsignale ZS(n), deren Werte den vom Schrittschaltsignalgenerator mit den in Schritten abgegebenen Schaltsignalen festgelegten Fortbwegungsgeschwindigkeiten des Magnetbandes entsprechen, zugeführt. Die Werte der Referenzsignale ZS(n) sind dabei in einem Speicher mit wahlfreiem Zugriff des Mikroprozessors für alle Schritte des Schrittschaltsignalgenerators in Tabellenform gespeichert. Dies ist schematisch in der letzten Spalte der Tabelle gemäss Fig. 7 angegeben. Die Referenzsignale sind im vorliegenden Fall durch Zählerstände ZS(n) gebildet, die im Timer-Register RT2 bei den vom Schrittschaltsignalgenerator mit den in Schritten abgegebenen Schaltsignalen festgelegten Fortbewegungsgeschwindigkeiten entsprechend den unterschiedlichen zeitlichen Abständen zwischen zwei steigenden Flanken des vom Tachogenerator 18, 19 der Bandantriebseinrichtung 13 gelieferten Ist-Signales vorliegen.

Beim Programmablauf gemäss Fig. 11 wird nach der Abgabe der Schaltsignale TW(n), DS(n), und TV(n) bei den Blöcken 100, 102 und 103 beim Block 117 in ein Register R10 das Referenzsignal ZS(n) zu der im Register R5 enthaltenen Schrittzahl Z(n) eingeschrieben. Beim Block 118 wird nachfolgend geprüft, ob die Register R9 und R10 inhaltsgleich sind. Es wird also geprüft, ob das Detektionssignal im Register R9 mit dem Referenzsignal im Register R10 übereinstimmt, wodurch beim Block 118 auf einfache Weise die vorerwähnte Vergleichseinrichtung realisiert ist. Solange die Inhalte der Register R9 und R10 unterschiedlich gross sind, also die Prüfung beim Block 118 negativ ausfällt, wird die Prüfung beim Block 118 ständig wiederholt. Erst dann, wenn das Detektionssignal mit dem Referenzsignal übereinstimmt, und folglich die Inhalte der Register R9 und R10 gleich gross sind, wenn also das Magnetband tatsächlich mit der durch das Schaltsignal TW(n) festgelegten Fortbewegungsgeschwindigkeit angetrieben wird, dann wird aufgrund des positiven Prüfungsergebnisses beim Block 118 der Programmablauf beim Block 95 fortgesetzt und somit der Schrittschaltsignalgenerator zur Abgabe der Schaltsignale gemäss dem nächsten Schritt freigegeben.

Die Fig. 12 zeigt eine Abwandlung des Ausführungsbeispieles gemäss Fig. 11, wobei als Vergleichseinrichtung eine gegenüber dem Mikroprozessor 71 externe Vergleichseinrichtung vorgesehen ist, die bei Koinzidenz der ihr zugeführten Detektionssignale und Referenzsignale ein impulsförmiges Ausgangssignal abgibt. Eine solche externe Vergleichseinrichtung kann beispielsweise einen Differenzverstärker aufweisen, dem an einem Eingang ein von einem Frequenz-Spannungs-Wandler abgegebenes Detektionssignal und an einem anderen Eingang ein von einem umschaltbaren Spannungsteiler abgegebenes Referenzsignal zugeführt wird und der bei Koinzidenz der zugeführten Signale über eine von ihm angesteuerte Gatterstufe ein impulsförmiges Ausgangssignal abgibt. Beim Programmablauf gemäss Fig. 12 wird nach der Abgabe der Schaltsignale TW(n), DS(n) und TV(n) bei den Blöcken 100, 102 und 103 beim Block 119 geprüft, ob eine Einschaltflanke des vorerwähnten Ausgangssignales auftritt. Solange dies nicht der Fall ist, wird diese Prüfung wiederholt. Erst wenn eine solche Einschaltflanke auftritt, wird der Programmablauf beim Block 95 fortgesetzt und somit der Schrittschaltsignalgenerator zur Abgabe der Schaltsignale gemäss dem nächsten Schritt freigegeben.

Wie aus Vorstehendem ersichtlich ist, gibt es eine Reihe von Abwandlungen für Schrittschaltsignalgeneratoren zum Erzeugen von einer Vielzahl, in ihren Werten sich schrittweise ändernden Schaltsignalen, mit denen die Bandantriebseinrichtung, der Sägezahnsignalgenerator des Spurfolgeservosystems und die Kopfantriebseinrichtung in aneinander angepassten, nahezu beliebig kleinen Stufen korrespondierend zueinander umschaltbar sind, um auch bei einem Betriebsartenwechsel eine einwandfreie und ungestörte Bildwiedergabe zu gewährleisten.

Selbstverständlich sind im Rahmen der Erfindung noch eine Reihe von Abwandlungen der beschriebenen Ausführungsbeispiele möglich. Beispielsweise kann ein solches System zum Wiedergeben von Digitalinformationssignalen dienen. Auch kann ein solches System zum Wiedergeben von Schwarz-Weiss-Fernsehsignalen dienen, wobei dann damit das Auslangen gefunden werden kann, dass nur die Bandantriebseinrichtung und der Sägezahnsignalgenerator des Spurfolgeservosystems bei einem Betriebsartenwechsel schrittweise, in nahezu beliebig kleinen aneinander angepassten Stufen umgeschaltet werden. Auch im Hinblick auf den zeitlichen Ablauf der Abgabe der Schaltsignale jeden Schrittes sind verschiedene, den jeweiligen Erfordernissen entsprechend angepasste Möglichkeiten offen; gegebenenfalls können die Schaltsignale jeden Schrittes unmittelbar im Takt des programmablaufes hintereinander abgegeben werden, ohne dass zwischen dem Abgabezeitpunkt von zwei Schaltsignalen eine vorgegebene Zeitspanne liegt. Im Hinblick auf die Eingabe der jeweils gewünschten, hinsichtlich der Fortbewegungsgeschwindigkeit des Magnetbandes unterschiedlichen Wiedergabe-Betriebsarten, wofür bei den beschriebenen Ausführungsbeispielen eine Betriebsarten-Wähleinrichtung mit einem separaten Betriebsartenschalter für jede Betriebsart vorgesehen ist, ist es selbstverständlich auch möglich, eine mit einem potentiometer versehene Betriebsarten-Wähleinrichtung vorzusehen, bei der die jeweils eingestellte Potentiometerstellung eine bestimmte Fortbewegungsgeschwindigkeit des Magnetbandes festlegt und wobei jeder Potentiometerstellung eine digitale Bit-Kombination zugeordnet wird, die dann die Schrittzahl des Schrittschaltsignalgenerators darstellt, mit dessen Schaltsignalen die im System entsprechend der Potentiometerstellung hinsichtlich der Fortbewegungsgeschwindigkeit des Magnetbandes festgelegte Wiedergabe-Betriebsart einschaltbar ist, wie dies in analoger Weise auch bei der Eingabe mit für jede Betriebsart separaten Betriebsartenschaltern der Fall ist. Mit einer solchen mit einem Potentiometer versehenen Betriebsarten-Wähleinrichtung ist auf einfache Weise eine relativ hohe Anzahl von vorgegebenen Fortbewegungsgeschwindigkeiten beim Wiedergeben von Informationssignalen auswählbar. Selbstverständlich gibt die Schalteinrichtung beim Einschalten einer Wiedergabe-Betriebsart im System noch eine Reihe von anderen Schaltsignalen ab, wie dies im beschriebenen Ausführungsbeispiel nach Fig. 1 in der Zeichnung durch weitere Ausgänge derselben auch angedeutet ist.

**Patentansprüche**

1. System zum Wiedergeben von auf einem Nagnetband in schräg zu dessen Längsrichtung verlaufenden, parallel nebeneinander liegenden Spuren gespeicherten Informationssignalen bei verschiedenen, durch Betätigen einer Betriebsarten-Wähleinrichtung einschaltbaren Betriebsarten mit unterschiedlichen vorgegebenen Fortbewegungsgeschwindigkeiten des Magnetbandes. das zum Fortbewegen des Magnetbandes eine hinsichtlich der Fortbewegungsgeschwindigkeit umschaltbare Bandantriebseinrichtung und zum aufeinanderfolgenden Abtasten der Spuren mindestens einen von einer Kopfantriebseinrichtung rotierend antreibbaren Magnetkopf sowie zum Nachführen desselben entlang der Spuren ein Spurfolgeservosystem enthält, das zum Verstellen des Magnetkopfes quer zu den Spuren eine elektromechanische Verstelleinrichtung, der ein aus einem mit einem Regelkreis des Spurfolgeservosystems erzeugten Regelsignal und aus einem sägezahnförmigen, im Signalverlauf den Fortbewegungsgeschwindigkeiten des Magnetbandes angepassten Steuersignal zusammengesetztes Stellsignal zuführbar ist, und das zum Erzeugen des sägezahnförmigen Steuersignales einen hinsichtlich des Signalverlaufes umschaltbaren Sägezahnsignalgenerator aufweist, wobei zum Umschalten der Bandantriebseinrichtung und des Sägezahnsignalgenerators bei einem Betriebsartenwechsel eine durch Betätigen der Betriebsarten-Wähleinrichtung ansteuerbare Schalteinrichtung zum Erzeugen von mindestens einem Schaltsignal vorgesehen ist, die sowohl die Bandantriebseinrichtung hinsichtlich der Fortbewegungsgeschwindigkeit des Magnetbandes als auch den Sägezahnsignalgenerator hinsichtlich des Signalverlaufes des Steuersignales in einem vorgegebenen Umschaltvorgang korrespondierend zueinander umschaltet, dadurch gekennzeichnet, dass die Schalteinrichtung einen durch Betätigen der Betriebsarten-Wähleinrichtung in Betrieb setzbaren Schrittschaltsignalgenerator zum Erzeugen von bei einem Betriebsartenwechsel in automatisch und kontinuierlich aufeinanderfolgenden Schritten abgegebenen, bei jedem Schritt sich im Wert ändernden Schaltsignalen aufweist, der mit seinen Schaltsignalen die Bandantriebseinrichtung und den Sägezahnsignalgenerator hinsichtlich der Fortbewegungsgeschwindigkeit des Magnetbandes und des Signalverlaufes des Steuersignales schrittweise in durch den Wert der Schaltsignale festgelegten, aneinander angepassten Stufen korrespondierend zueinander umschaltet, wobei der Umschaltvorgang in durch die Schrittfolge der Schaltsignale des Schrittschaltsignalgenerators festgelegte Umschaltintervalle unterteilt ist.

2. System nach Anspruch 1, bei dem die Kopfantriebseinrichtung für den Magnetkopf zur Vermeidung von Zeitbasisfehlern in den vom Magnetkopf bei den Betriebsarten mit unterschiedlichen Fortbewegungsgeschwindigkeiten des Magnetbandes wiedergegebenen Informationssignalen hinsichtlich der Drehzahl des Magnetkopfes korrespondierend zur Bandantriebseinrichtung umschaltbar ist, dadurch gekennzeichnet, dass der Schrittschaltsignalgenerator bei einem Betriebsartenwechsel in automatisch und kontinuierlich aufeinanderfolgenden Schritten zusätzliche, bei jedem Schritt sich im Wert ändernde Schaltsignale abgibt und mit diesen zusätzlichen Schaltsignalen die Kopfantriebseinrichtung hinsichtlich der Drehzahl des Magnetkopfes schrittweise in durch den Wert der zusätzlichen Schaltsignale festgelegten, an die Stufen hinsichtlich der Umschaltung der Fortbewegungsgeschwindigkeit des Magnetbandes und des Signalverlaufs des Steuersignales angepassten Stufen korrespondierend zur Bandantriebseinrichtung und zum Sägezahnsignalgenerator umschaltet.

3. System nach Anspruch 1 oder 2, dadurch gekennzeichnet, dass der Schrittschaltsignalgenerator die Schaltsignale in aufeinanderfolgenden Schritten mit gleichem zeitlichen Abstand abgibt.

4. System nach Anspruch 1 oder 2, dadurch gekennzeichnet. dass der Schrittschaltsignalgenerator die Schaltsignale in aufeinanderfolgenden Schritten mit zur Grösse der durch den Wert der Schaltsignale festgelegten, aneinander angepassten Stufen proportionalen zeitlichen Abständen abgibt.

5. System nach Anspruch 1 oder 2. dadurch gekennzeichnet, dass der Schrittschaltsignalgenerator die Schaltsignale in aufeinanderfolgenden Schritten mit von einer mit dem Schrittschaltsignalgenerator zusammenwirkenden Vergleichseinrichtung festgelegten zeitlichen Abständen abgibt, wobei der Vergleichseinrichtung einerseits von einer mit dem Magnetband zusammenwirkenden, zum Detektieren der Fortbewegungsgeschwindigkeiten des Magnetbandes vorgesehenen Detektionseinrichtung abgegebene Detektionssignale und andererseits Referenzsignale, deren Werte den vom Schrittschaltsignalgenerator mit den in Schritten abgegebenen Schaltsignalen festgelegten Fortbewegungsgeschwindigkeiten des Magnetbandes entsprechen, zum Vergleich zugeführt sind und die Vergleichseinrichtung bei Koinzidenz der ihr zugeführten Signale den Schrittschaltsignalgenerator zur Abgabe der Schaltsignale gemäss dem nächsten Schritt freigibt.

6. System nach einem der Ansprüche 1 bis 5, dadurch gekennzeichnet, dass zur Bildung des Schrittschaltsignalgenerators eine programmierbare Datenverarbeitungseinheit herangezogen ist.

7. System nach den Ansprüchen 5 und 6, dadurch gekennzeichnet, dass zur Bildung der Vergleichseinrichtung und der Detektionseinrichtung ebenfalls die Datenverarbeitungseinheit herangezogen ist.

8. System nach Anspruch 7, dadurch gekennzeichnet, dass die Werte der der Vergleichseinrichtung zugeführten Referenzsignale für alle Schritte des Schrittschaltsignalgenerators in Tabellenform in der Datenverarbeitungseinheit gespeichert sind.

9. System nach einem der Ansprüche 6 bis 8, dadurch gekennzeichnet, dass die Werte aller Schaltsignale für alle Schritte des Schrittschaltsignalgenerators in Tabellenform in der Datenverarbeitungseinheit gespeichert sind.

## Revendications

1. Système de lecture de signaux d'information enregistrés sur une bande magnétique dans des pistes voisines parallèles s'étendant obliquement par rapport à la direction longitudinale de ladite bande, en modes de fonctionnement différents avec des vitesses de défilement prédéterminées différentes de la bande magnétique, modes de fonctionnement qui peuvent être sélectionnés par manoeuvre d'un dispositif de sélection de mode, système comportant un dispositif d'entraînement de la bande pouvant être commuté pour entraîner la bande magnétique à des vitesses différentes, au moins une tête magnétique pouvant être tournée au moyen d'un dispositif d'entraînement de la tête pour balayer successivement les pistes, et un servo-système de suivi de piste pour guider ladite tête le long des pistes, servo-système qui, d'une part, pour régler la tête magnétique dans le sens transversal aux pistes, comporte un dispositif de réglage électromécanique auquel peuvent être appliqués un signal d'asservissement engendré par un circuit d'asservissement du servosystème de suivi de piste et un signal de réglage constitué d'un signal de commande dont l'allure est adaptée aux vitesses de défilement de la bande magnétique et qui, d'autre part, pour engendrer le signal de commande en dents de scie, comporte un générateur de signaux en dents de scie commutable en ce qui concerne l'allure de signal, alors que, pour commuter le dispositif d'entraînement de bande et le générateur de signaux en dents de scie lors d'un changement de mode de fonctionnement, il est prévu un dispositif de commutation pouvant être attaqué par manoeuvre du dispositif de sélection de mode de fonctionnement pour engendrer au moins un signal de commutation, dispositif de commutation qui, dans une opération de commutation prédéterminée, commute en correspondance l'un avec l'autre le dispositif d'entraînement de bande en ce qui concerne la vitesse de défilement de la bande magnétique et le générateur de signaux en dents de scie en ce qui concerne l'allure du signal de commande, caractérisé en ce que le dispositif de commutation comporte un générateur de signaux de commutation pas à pas pouvant être mis en fonctionnement par manoeuvre du dispositif de sélection de mode de fonctionnement pour engendrer, lors d'un changement de mode de fonctionnement, des signaux de commutation dans des étapes qui se succèdent automatiquement et continûment, signaux de commutation dont la valeur varie lors de chaque étape et qui commutent par étapes et en correspondance l'un avec l'autre le dispositif d'entraînement de bande et le générateur de signaux de dents de scie en ce qui concerne la vitesse de défilement de la bande magnétique et de l'allure du signal de commande, dans des phases adaptées les unes aux autres et fixées par la valeur des signaux de commutation, l'opération de commutation étant subdivisée en intervalles de commutation fixés par la séquence des étapes des signaux de commutation du générateur de signaux de commutation pas à pas.

2. Système selon la revendication 1, dans lequel le dispositif d'entraînement de la tête magnétique, pour éviter des erreurs de base de temps dans les signaux d'information lus par la tête magnétique dans des modes de fonctionnement à vitesses de défilement différentes de la bande magnétique, est commutable en ce qui concerne la vitesse de rotation de la tête magnétique en correspondance avec le dispositif d'entraînement de bande, caractérisé en ce que, lors d'un changement de mode de fonctionnement, le générateur de signaux de commutation pas à pas délivre dans des étapes qui se succèdent automatiquement et continûment, des signaux de commutation supplémentaires variant en valeur lors de chaque étape et en ce que, en correspondance avec le dispositif d'entraînement de bande et du générateur de signaux en dents de scie, ces signaux de commutation supplémentaires commutent le dispositif d'entraînement de la tête en ce qui concerne la vitesse de rotation de la tête magnétique par étapes dans des phases fixées par la valeur des signaux supplémentaires et adaptées aux phases dans lesquelles sont commutées la vitesse de défilement de la bande magnétique et l'allure du signal de commande.

3. Système selon la revendication 1 ou 2, caractérisé en ce que le générateur de signaux de commutation pas à pas délivre les signaux de commutation dans des étapes successives séparées par des intervalles de temps égaux.

4. Système selon la revendication 1 ou 2, caractérisé en ce que le générateur de signaux de commutation pas à pas délivre les signaux de commutation dans des étapes successives séparées par des intervalles de temps proportionnels à la longueur des phases fixées par la valeur des signaux de commutation et adaptées les unes aux autres.

5. Système selon la revendication 1 ou 2, caractérisé en ce que le générateur de signaux de commutation pas à pas délivre les signaux de commutation dans des étapes successives séparées par des intervalles de temps fixés par un dispositif comparateur coopérant avec le générateur de signaux de commutation pas à pas, le dispositif comparateur recevant, d'une part, des signaux de détection fournis par un dispositif de détection coopérant avec la bande magnétique et prévus pour détecter les vitesses de défilement de la bande magnétique et, d'autre part, des signaux de référence dont les valeurs correspondent aux vitesses de défilement de la bande magnétique fixées par les signaux de commutation fournis par étapes par le générateur de signaux de commutation pas à pas pour établir la comparaison entre ceux-ci dispositif comparateur qui, lors de la coïncidence des signaux reçus, libère le générateur de signaux de commutation pas à pas pour délivrer les signaux de commande selon l'étape suivante.

6. Système selon l'une des revendications 1 à 5, caractérisé en ce que le générateur de signaux de commutation pas à pas est formé par une unité de traitement de données programmable.

7. Système selon les revendications 5 et 6, caractérisé en ce que l'unité de traitement de données est également utilisée pour former le dispositif comparateur et le dispositif de détection.

8. Système selon la revendication 7, caractérisé en ce que les valeurs des signaux de référence appliqués au dispositif comparateur, pour toutes les étapes du générateur de signaux de commutation pas à pas, sont stockées sous la forme d'une table dans l'unité de traitement de données.

9. Système selon l'une des revendications 6 à 8, caractérisé en ce que les valeurs de tous les signaux de commutation pour toutes les étapes du générateur de signaux de commutation pas à pas sont stockées sous la forme d'une table dans l'unité de traitement de données.

## Claims

1. A system for the reproduction of information signals recorded on a magnetic tape in parallel adjacent tracks, which tracks are inclined relative to the longitudinal direction of said tape, in different modes of operation at different predetermined transport speeds of the magnetic tape, which modes can be started by actuation of a mode selection device, which system comprises a tape drive device which is switchable to drive the magnetic tape with different transport speeds, at least one magnetic head which is rotatable by means of a head drive device for consecutively scanning the tracks, and a tracking servo system for guiding said head along the tracks, which servo system, in order to position the magnetic head in a direction transverse to the tracks, comprises an electromechanical positioning device to which a drive signal can be applied, which drive signal comprises a tracking signal generated by a control circuit of the tracking servo system and a sawtooth-shaped control signal whose signal waveform is adapted to the instantaneous transport speed of the magnetic tape, and a variable-waveform sawtooth generator for generating the sawtooth-shaped control signal, there being provided a switching device which is responsive to the actuation of the mode-selection device to produce at least one switching signal for switching over the tape drive device and the sawtooth generator when the mode of operation is changed, which switching device switches over the tape drive device as regards the transport speed of the magnetic tape and the sawtooth generator as regards the signal waveform of the control signal in a predetermined switching process correspondently with each other, characterized in that the switching device comprises a stepping signal generator which by actuation of the mode selection device is operable to generate switching signals which in the case of a change of mode are supplied in steps which succeed each other automatically and continuously, which switching signals change in value upon every step and switch over the tape drive device and the sawtooth signal generator with respect to the transport speed of the magnetic tape and the signal waveform of the control signal correspondently with each other stepwise in stages which are defined by the values of the switching signals and which are adapted to each other, the switching process being divided into switching intervals defined by the step sequence of the switching signals from the stepping signal generator.

2. A system as claimed in Claim 1, in which the head drive device for the magnetic head can be changed over with respect to the speed of rotation of the magnetic head correspondently with the tape drive device in order to preclude timebase errors in the information signals reproduced by the magnetic head in modes with different transport speeds of the magnetic tape, characterized in that in the case of a change of mode the stepping signal generator supplies additional switching signals in steps which succeed each other automatically and continuously, which additional switching signals have values which change upon every step and which provide a stepwise change-over of the head drive device with respect to the speed of rotation of the magnetic head in stages which are defined by the values of the additional switching signals and which are adapted to the stages with respect to the change-over of the transport speed of the magnetic tape and the signal waveform of the control signal correspondently with the tape drive device and the sawtooth generator.

3. A system as claimed in Claim 1 or 2, characterized in that the stepping signal generator supplies the switching signals in consecutive steps at equal time intervals.

4. A system as claimed in Claim 1 or 2, characterized in that the stepping signal generator supplies the switching signals in consecutive steps at time intervals which are proportional to the lengths of the stages which are defined by the values of the switching signals and which are adapted to one another.

5. A system as claimed in Claim 1 or 2, characterized in that the stepping signal generator supplies the switching signals in consecutive steps at time intervals which are defined by a comparator device which cooperates with the stepping signal generator, the detection signals, which are supplied by the detection device which cooperates with the magnetic tape to detect the transport speeds of said tape, and reference signals, whose values correspond to the transport speeds of the magnetic tape as defined by the switching signals supplied in steps by the stepping signal generator, being applied to the comparator device for comparison, which comparator device enables the stepping signal generator to supply switching signals in conformity with the next step when the signals applied to said comparator device coincide.

6. A system as claimed in any one of the Claims 1 to 5, characterized in that a programmable data processing unit is employed to form the stepping signal generator.

7. A system as claimed in Claims 5 and 6, characterized in that the data processing unit is also employed to form the comparator device and the detection device.

8. A system as claimed in Claim 7, characterized in that the values of the reference signals applied to the comparator device for all the steps of the stepping signal generator are stored in the form of a table in the data processing unit.

9. A system as claimed in any one of the Claims 6 to 8, characterized in that the values of all the switching signals for all the steps of the stepping signal generator are stored in the form of a table in the data processing unit.

Fig.1

Fig.2

Fig.3

Fig.4

Fig.6

Fig.5

| Z(n) | | v(n) | TW(n) | | DS(n) | | TV(n) | | ZS(n) | |
|---|---|---|---|---|---|---|---|---|---|---|
| Z(0) | 237 | +7·v | TW(0) | 16 | DS(0) | -96 | TV(0) | -19.424 | ZS(0) | 397 |
| Z(1) | 238 | | TW(1) | 17 | DS(1) | -90 | TV(1) | -19.435 | ZS(1) | 412 |
| Z(2) | 239 | | TW(2) | 18 | DS(2) | -84 | TV(2) | -19.445 | ZS(2) | 428 |
| Z(38) | 275 | +3·v | TW(38) | 39 | DS(38) | -32 | TV(38) | -19.808 | ZS(38) | 944 |
| Z(60) | 297 | +1·v | TW(60) | 121 | DS(60) | 0 | TV(60) | -20.000 | ZS(60) | 2850 |
| Z(61) | 298 | | TW(61) | 167 | DS(61) | +3 | TV(61) | -20.018 | ZS(61) | 3933 |
| Z(65) | 302 | +1/2·v | TW(65) | 244 | DS(65) | +8 | TV(65) | -20.048 | ZS(65) | 5737 |
| Z(70) | 307 | 0·v | TW(70) | | DS(70) | +16 | TV(70) | -20.096 | ZS(70) | |
| Z(78) | 315 | -1·v | TW(78) | 121 | DS(78) | +32 | TV(78) | -20.160 | ZS(78) | 2850 |
| Z(119) | 356 | -5·v | TW(119) | 24 | DS(119) | +96 | TV(119) | -20.576 | ZS(119) | 589 |

Fig.7

4

Fig.8

Fig.9

Fig.10

Fig.11

Fig.12